# EUROPEAN PATENT APPLICATION

(11) **EP 4 697 080 A1**
(43) Date of publication of application: **18.02.2026**
(21) Application number: 24807389.2
(22) Date of filing: 23.04.2024
(51) Int. Cl.: G02B 27/01

(54) **ELECTRONIC DEVICE COMPRISING DRIVE UNIT FOR ADJUSTING DISTANCE BETWEEN LENSES**

(30) Priority: 15.05.2023 KR 20230062571; 19.07.2023 KR 20230094148
(71) Applicant: Samsung Electronics Co., Ltd., Suwon-si, Gyeonggi-do 16677 (KR)
(72) Inventor: CHOI, Nakhyun, Suwon-si Gyeonggi-do 16677 (KR); LEE, Kyungsup, Suwon-si Gyeonggi-do 16677 (KR); KWAK, Myunghoon, Suwon-si Gyeonggi-do 16677 (KR); KIM, Gyeongbeom, Suwon-si Gyeonggi-do 16677 (KR); KIM, Seonkyu, Suwon-si Gyeonggi-do 16677 (KR); PARK, Seokjoon, Suwon-si Gyeonggi-do 16677 (KR)
(74) Representative: Nederlandsch Octrooibureau
(86) International application number: PCT/KR2024/005453
(87) International publication number: WO 2024/237510

(57) **Abstract**

This electronic device comprises: a first lens barrel including a first lens; a second lens barrel including a second lens spaced apart from the first lens in a first direction; and a drive unit for adjusting the distance between the first lens and the second lens. The drive unit includes a motor, a first shaft, a second shaft, and a third shaft. The first shaft, the second shaft, and the third shaft are arranged in a direction perpendicular to the first direction.

## Description

### [Technical Field]

The present disclosure relates to an electronic device including a driving unit for adjusting a distance between lenses.

### [Background Art]

A wearable device may be worn and used on a body of a user. The wearable device may be provided as various types of products. For example, the wearable device may include a glasses-type device to provide augmented reality (AR) or virtual reality (VR) to the user.

The wearable device formed of the glasses-type device may include lenses disposed at positions corresponding to eyes of the user. The lenses may be configured to refract light provided from a display so that the user wearing the wearable device may clearly recognize visual information displayed on the display. Since an inter pupillary distance (IPD) is different according to a body structure of the user, an electronic device may include a driving unit for adjusting a distance between the lenses.

The above-described information may be provided as a related art for the purpose of helping understanding of the present disclosure. No argument or decision is made as to whether any of the above description may be applied as a prior art related to the present disclosure.

### [Disclosure]

### [Technical Solutio]

An electronic device is provided. The electronic device may include a first barrel including a first lens, a second barrel including a second lens, and a driving unit. The second lens may be spaced apart from the first lens in a first direction. The driving unit may be disposed between the first lens and the second lens. The driving unit may be configured to adjust a distance between the first lens and the second lens. The driving unit may include a motor, a first shaft, a second shaft, and a third shaft. The first shaft may be connected to the motor. The first shaft may be configured to rotate based on a rotation of the motor. The second shaft may be operatively connected to the first barrel. The second shaft may be configured to move the first barrel including the first lens in the first direction or a second direction opposite to the first direction, by rotating based on the rotation of the first shaft. The third shaft may be operatively connected to the second barrel. The third shaft may be configured to move the second barrel including the second lens in the first direction or the second direction, by rotating based on the rotation of the first shaft. The first shaft, the second shaft, and the third shaft may be arranged in a direction perpendicular to the first direction.

An electronic device is provided. The electronic device may include a first lens, a second lens, a first barrel, a second barrel, and a driving unit. The second lens may be spaced apart from the first lens in a first direction. The first barrel may at least partially enclose the first lens. The second barrel may at least partially enclose the second lens. The driving unit may be disposed between the first barrel and the second barrel. The driving unit may be configured to adjust a distance between the first lens and the second lens. The driving unit may include a motor, a first shaft, a second shaft, a third shaft, a first connecting structure, and a second connecting structure. The first shaft may be connected to the motor. The first shaft may be configured to rotate based on a rotation of the motor. The second shaft may include a first screw thread. The second shaft may be configured to rotate based on the rotation of the first shaft. The third shaft may include a second screw thread. A direction of the second screw thread may have a direction opposite to a direction of the first screw thread. The third shaft may be configured to rotate based on the rotation of the first shaft. The first connecting structure may be connected to each of the first barrel and the first screw thread of the second shaft. The first connecting structure may be configured to move the first barrel in the first direction or a second direction, by moving in the first direction or the second direction opposite to the first direction along the second shaft, based on the rotation of the second shaft. The second connecting structure may be connected to each of the second barrel and the second screw thread of the third shaft. The second connecting structure may be configured to move the second barrel in the second direction or the first direction, by moving in the second direction or the first direction along the third shaft, based on the rotation of the third shaft. The first shaft, the second shaft, and the third shaft may be arranged in a direction perpendicular to the first direction.

### [Description of the Drawings]

FIG. 1 is a block diagram of an electronic device in a network environment according to an embodiment.
FIG. 2A is a perspective view of an electronic device according to an example embodiment.
FIG. 2B is an exploded perspective view of an electronic device according to an example embodiment.
FIG. 3 illustrates an electronic device according to an example embodiment.
FIG. 4 illustrates a driving unit of an electronic device according to an example embodiment.
FIG. 5 illustrates an example driving unit in which a case is omitted.
FIG. 6A illustrates an electronic device according to an example embodiment in a state in which a distance between a first lens and a second lens is decreased.
FIG. 6B illustrates an electronic device according to an example embodiment in a state in which a distance between a first lens and a second lens is increased.
FIG. 6C is a diagram of the electronic device illustrated in FIG. 6A as viewed from an opposite side.
FIG. 6D is a diagram of the electronic device illustrated in FIG. 6B as viewed from an opposite side.
FIGS. 7A and 7B illustrate an example driving unit in which a case is omitted.
FIG. 8 illustrates an example driving unit in which a case is omitted.
FIG. 9A illustrates an electronic device according to an example embodiment.

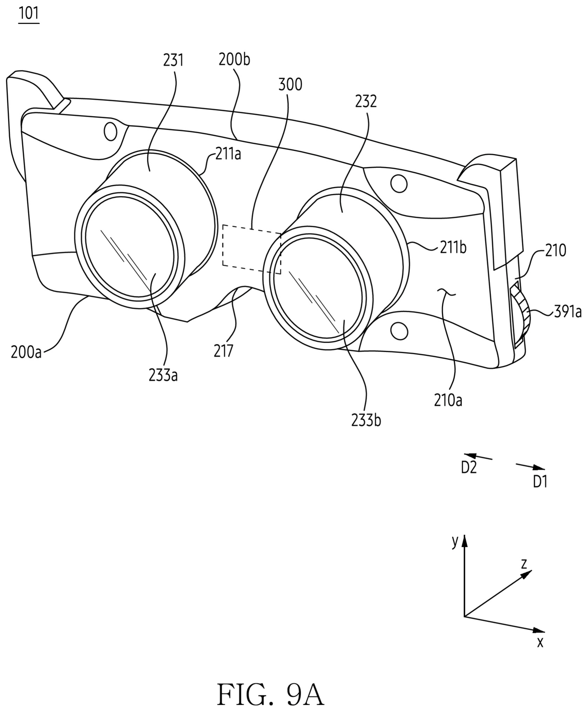

FIG. 9A illustrates an electronic device according to an example embodiment.

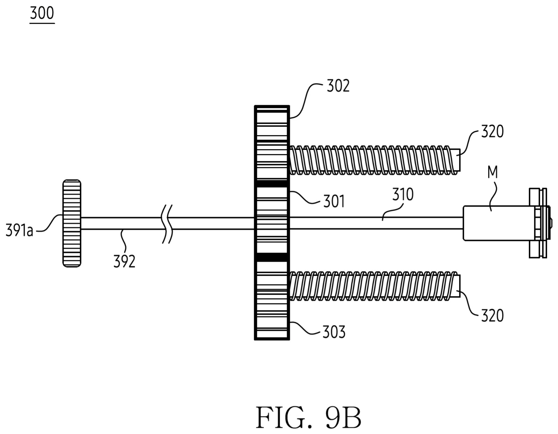

FIG. 9B illustrates an example of a driving unit of the electronic device according to an example embodiment illustrated in FIG. 9A.

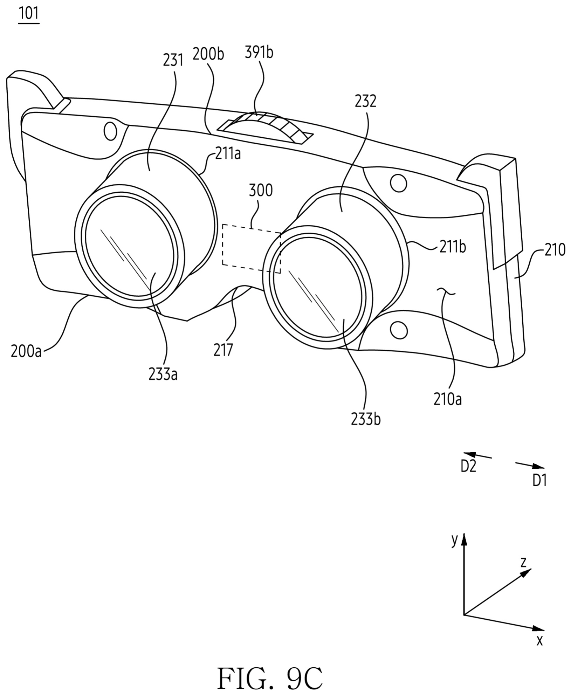

FIG. 9C illustrates an electronic device according to an example embodiment.

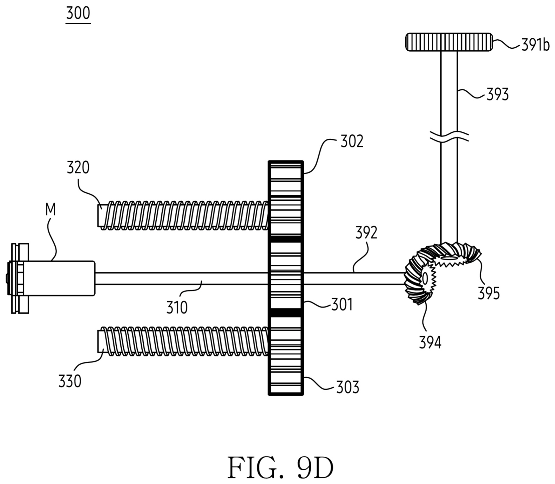

FIG. 9D illustrates an example of a driving unit of the electronic device according to an example embodiment illustrated in FIG. 9A.

### [Mode for Invention]

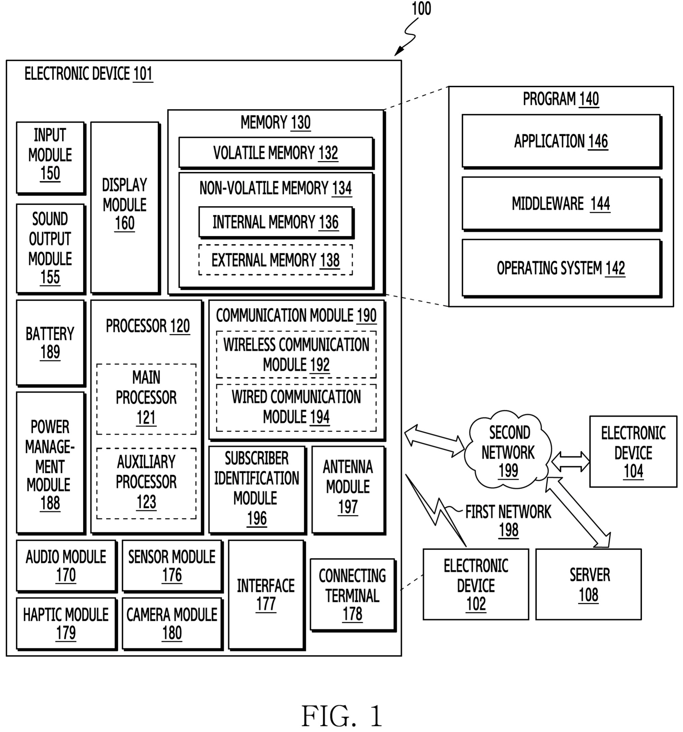

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

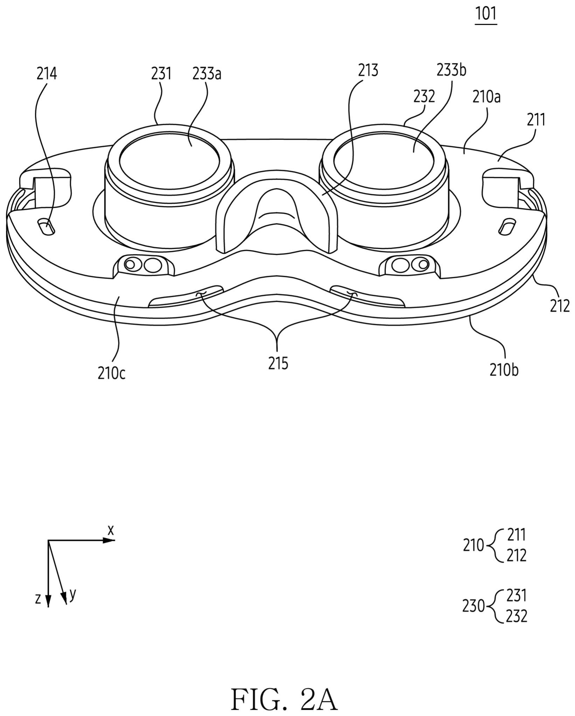

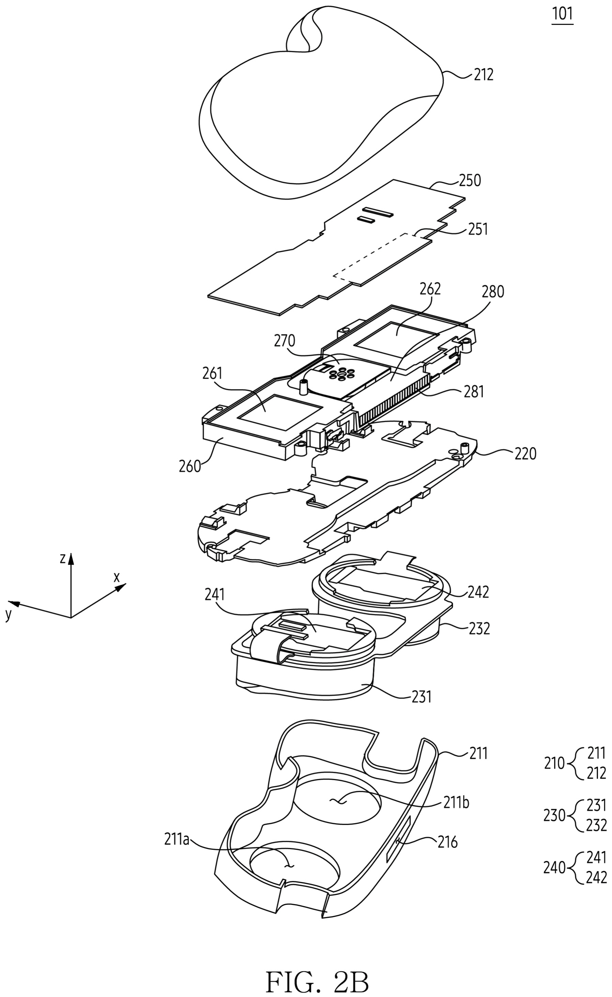

FIG. 2A is a perspective view of an electronic device according to an example embodiment. FIG. 2B is an exploded perspective view of an electronic device according to an example embodiment.

Referring to FIGS. 2A and 2B, an electronic device 101 according to an example embodiment may include a housing 210, a first bracket 220, a lens barrel 230, at least one display 240, a printed circuit board 250, a second bracket 260, a fan 270, and/or a heat sink 280. According to an example embodiment, the electronic device 101 may be referred to as a wearable device worn on a part of a body of a user. The electronic device 101 may be configured to provide the user with augmented reality (AR), virtual reality (VR), or mixed reality (MR) in which augmented reality and virtual reality are mixed. For example, the electronic device 101 may be configured to provide virtual reality through the at least one display 240 based on receiving data on an image from the outside of the electronic device 101. For example, the image provided by the electronic device 101 may include a still image and a video for implementing virtual reality. For example, the electronic device 101 may be configured to provide augmented reality through the at least one display 240 that displays a virtual object superimposed on a real image provided by light received from the outside of the electronic device 101. The real image may mean an image or a video implemented by the light received from the outside of the electronic device 101 without separate data processing by the electronic device 101. The virtual object may include at least one of text and an image corresponding to various pieces of information related to an object included in the real image. However, it is not limited thereto, and the virtual object may include at least one of text and an image corresponding to various pieces of information related to another object distinguished from the object included in the real image.

The housing 210 may form at least a portion of an exterior of the electronic device 101. The housing 210 may accommodate or surround various components of the electronic device 101. For example, the housing 210 may include a first surface 210a, a second surface 210b, and/or a third surface 210c.

According to an example embodiment, when the electronic device 101 is worn on the user, the first surface 210a of the housing 210 may face a portion of the body of the user. For example, when the electronic device 101 is worn on a head, the first surface 210a of the housing 210 may face a face of the user. The second surface 210b of the housing 210 may be opposite to the first surface 210a of the housing 210. The second surface 210b may be spaced apart from the first surface 210a. A direction (e.g., a +z direction) in which the second surface 210b faces may face a direction opposite to a direction (e.g., a -z direction) in which the first surface 210a faces. For example, the direction in which the second surface 210b faces may be substantially parallel to a gaze direction of the user when the electronic device 101 is worn on the user. According to an example embodiment, the third surface 210c of the housing 210 may connect the first surface 210a and the second surface 210b. The third surface 210c may extend between the first surface 210a and the second surface 210b. The third surface 210c may surround an edge of the first surface 210a and an edge of the second surface 210b. According to an example embodiment, the third surface 210c of the housing 210 may be bent with a curvature, but it is not limited thereto. For example, the third surface 210c may be perpendicular to the first surface 210a and the second surface 210b.

According to an example embodiment, the housing 210 may include a first housing 211 and a second housing 212. For example, the first housing 211 and the second housing 212 may form the housing 210 by being coupled to each other. According to an example embodiment, the first housing 211 may include a first driving hole 211a and a second driving hole 211b. The lens barrel 230 may be movable in the first driving hole 211a and/or the second driving hole 211b. For example, the first driving hole 211a may form a space in which a first barrel 231 may move. For example, the second driving hole 211b may form a space in which a second barrel 232 may move. The lens barrel 230 may provide a path of light, protect lenses 233a and 233b, and maintain shapes of the lenses 233a and 233b. The lens barrel 230 may be referred to as a lens barrel capable of accommodating the lenses 233a and 233b.

According to an example embodiment, the housing 210 may include a pad 213. When the electronic device 101 is worn on the user, the pad 213 may support the electronic device 101 by contacting a part of the body of the user. The pad 213 may have a shape corresponding to a shape of the part of the body of the user. For example, when the electronic device 101 is worn on the head of the user, the pad 213 may be referred to as a nose pad that may contact a nose of the user. The nose pad may be contacted with the nose of the user by having a shape corresponding to a shape of the nose of the user.

According to an example embodiment, the housing 210 may include a first inlet 214, a second inlet 215, and/or an outlet 216. For example, the first inlet 214, the second inlet 215, and the outlet 216 may allow fluid communication between an inner space of the housing 210 and an outer space of the housing 210. Since the inner space of the housing 210 is in the fluid communication with the outer space of the housing 210, air flow between the inner space and the outer space of the housing 210 may be allowed. Through the airflow, adjustment of a pressure and a temperature inside the housing 210 may be possible.

For example, the first inlet 214 may penetrate the first surface 210a of the housing 210. The second inlet 215 may penetrate the third surface 210c of the housing 210. The first inlet 214 and/or the second inlet 215 may be one or more. Air may be introduced into the inner space of the housing 210 through the first inlet 214 and/or the second inlet 215. For example, the outlet 216 may transfer air that has passed through the heat sink 280 to the outside of the housing 210. According to an example embodiment, at least a portion of the outlet 216 may overlap the heat sink 280 when the housing 210 is viewed from above. For example, the outlet 216 may penetrate the third surface 210c of the housing 210. The outlet 216 may be one or more. Heat generated by an operation of the components of the electronic device 101 may be discharged to the outlet 216 through the heat sink 280.

According to an example embodiment, the first bracket 220 may support some of the components of the electronic device 101 in the housing 210. According to an example embodiment, the first bracket 220 may be disposed in the housing 210. For example, the first bracket 220 may be disposed between the lens barrel 230 and the second bracket 260.

The lens barrel 230 may be coupled to the housing 210 to be movable with respect to the housing 210. For example, the lens barrel 230 may be movable with respect to the first bracket 220 in the housing 210. According to an example embodiment, the lens barrel 230 may include the first barrel 231 and the second barrel 232. The first barrel 231 may be positioned in the first driving hole 211a. The second barrel 232 may be positioned in the second driving hole 211b. According to an example embodiment, a portion of the lens barrel 230 may be coupled to the at least one display 240.

According to an example embodiment, the lens barrel 230 may be coupled to the lenses 233a and 233b. For example, the first lens 233a may be included inside the first barrel 231, and the second lens 233b may be included inside the second barrel 232.

For example, the lenses 233a and 233b may refract light emitted from the at least one display 240 so that the electronic device 101 may provide virtual reality. The lenses 233a and 233b may face the body of the user when the electronic device 101 is worn on the user. For example, the lenses 233a and 233b may face a pupil of the user when the electronic device 101 is worn on the head of the user. According to an example embodiment, the lenses 233a and 233b may include the first lens 233a coupled to the first barrel 231 and the second lens 233b coupled to the second barrel 232.

The at least one display 240 may be configured to provide visual information. For example, the at least one display 240 may be configured to emit light based on receiving data for displaying an image from a processor (e.g., the processor 120 of FIG. 1). According to an example embodiment, the at least one display 240 may be electrically connected to the printed circuit board 250. For example, the at least one display 240 may be electrically connected to the printed circuit board 250 through a flexible printed circuit board.

According to an example embodiment, the at least one display 240 may be coupled to the lens barrel 230. For example, the at least one display 240 may be disposed in the lens barrel 230 disposed inside the housing 210. According to an example embodiment, the at least one display 240 may include a first display 241 and a second display 242. The first display 241 may be coupled to the first barrel 231. The second display 242 may be coupled to the second barrel 232.

The printed circuit board 250 may form an electrical connection between the components in the electronic device 101.

The second bracket 260 may support the components of the electronic device 101. For example, the second bracket 260 may support a first battery 261 and a second battery 262. The first battery 261 may be coupled to the second bracket 260. The second battery 262 may be spaced apart from the first battery 261 and coupled to the second bracket 260. According to an example embodiment, the second bracket 260 may surround the first battery 261 and the second battery 262. The first battery 261 and the second battery 262 may be electrically connected to the printed circuit board 250.

The fan 270 may generate airflow for cooling the housing 210 and components positioned inside the housing 210. For example, the fan 270 may generate airflow for introducing air outside the housing 210 into the inlets 214 and 215 of the housing 210. The fan 270 may generate airflow to emit the air inside the housing 210 to the outlet 216 of the housing 210.

According to an example embodiment, the fan 270 may be electrically connected to the printed circuit board 250. The fan 270 may be electrically connected to at least one of the first battery 261 and the second battery 262. The fan 270 may receive power from the at least one of the first battery 261 and the second battery 262.

According to an example embodiment, the fan 270 may be coupled to the second bracket 260. For example, the fan 270 may be disposed between the first battery 261 and the second battery 262. According to an example embodiment, the fan 270 may be disposed between the printed circuit board 250 and the first bracket 220. The fan 270 may face the first bracket 220.

The heat sink 280 may discharge heat generated from the printed circuit board 250 to the outside of the housing 210. For example, it may include a plurality of pins 281 for increasing a surface area of the inside of the heat sink 280. According to an example embodiment, the heat sink 280 may face the printed circuit board 250. According to an example embodiment, an area 251 of the printed circuit board 250 may face the heat sink 280. For example, the area 251 of the printed circuit board 250 may at least partially overlap the heat sink 280 when the printed circuit board 250 is viewed vertically (e.g., a +z direction or a -z direction). According to an example embodiment, in the area 251 of the printed circuit board 250, electronic components having a relatively high calorific value may be disposed among a plurality of electronic components disposed on the printed circuit board 250. For example, an electronic component disposed in the first area 251 of the printed circuit board 250 may include the processor 120. As the heat sink 280 faces the area 251 of the printed circuit board 250, the heat generated from the electronic components of the printed circuit board 250 may be discharged to the outside of the housing 210.

According to an example embodiment, the heat sink 280 may pass the airflow generated by the fan 270. The heat sink 280 may discharge heat transferred from the airflow generated by the fan 270 to the outside of the housing 210. According to an example embodiment, the heat sink 280 may be coupled to the second bracket 260. For example, the heat sink 280 may be disposed between the first battery 261 and the second battery 262. According to an example embodiment, the heat sink 280 may at least partially overlap the fan 270 when the housing 210 is viewed from above (e.g., a -y direction).

According to an example embodiment, air outside the housing 210 may be introduced into the housing 210 through the inlets 214 and 215 by the airflow generated through the fan 270. The air introduced into the housing 210 through the inlets 214 and 215 may be transferred to components (e.g., the at least one display 240 and/or the printed circuit board 250) in the housing 210. Heat generated in the housing 210 may be transferred to the air introduced into the housing 210. The air heated in the housing 210 may move to the fan 270. As the air passes through the heat sink 280 and the outlet 216 and is discharged to the outside of the housing 210, the inside of the housing 210 may be cooled.

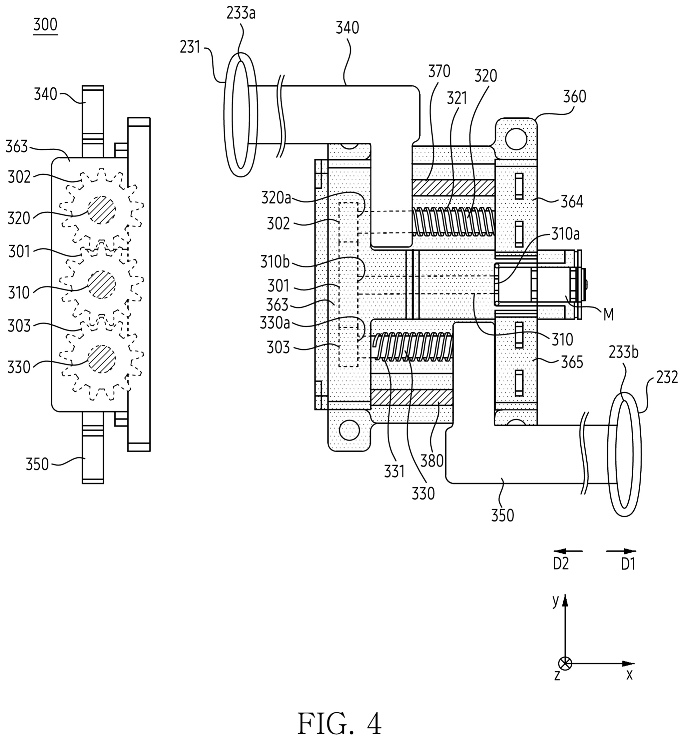

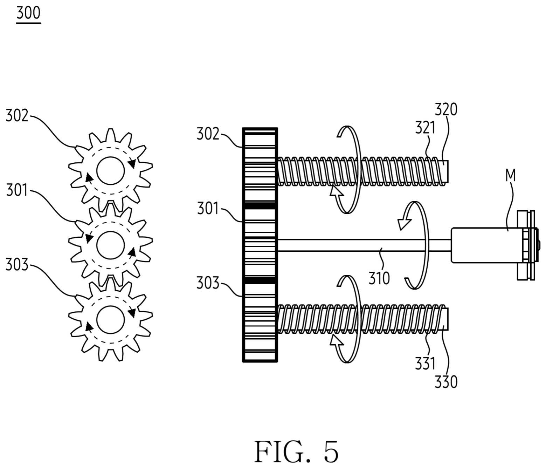

The electronic device 101 according to an example embodiment may include a driving unit (e.g., a driving unit 300 of FIG. 4) configured to adjust a distance between the first lens 233a and the second lens 233b. The driving unit 300 may be disposed between the first lens 233a and the second lens 233b. In an embodiment, the driving unit 300 may include a motor (e.g., a motor M of FIG. 5) that provides driving power and a shaft (e.g., a first shaft 310 of FIG. 5) connected to the motor M. For example, the lens barrel 230 connected to the first lens 233a and the second lens 233b may be operatively connected to the motor M. As the motor M rotates, the lens barrel 230 may be configured to adjust the distance between the first lens 233a and the second lens 233b. For example, the lens barrel 230 may include the first barrel 231 (or rim) surrounding the first lens 233a and the second barrel 232 surrounding the second lens 233b.

According to an example embodiment, in a case that a structure for adjusting the distance between the first lens 233a and the second lens 233b is connected to one shaft, a size of the driving unit 300 may increase. For example, a partial area of the shaft may be connected to a structure (e.g., a first connecting structure 340 of FIG. 4) connected to the first lens 233a, and a remaining area of the shaft may be connected to a structure (e.g., a second connecting structure 350 of FIG. 4) connected to the second lens 233b. According to the structure, a length of the shaft may be increased so that the first lens 233a and the second lens 233b may move simultaneously through one shaft. As the length of the shaft increases, the size of the driving unit 300 may increase. In a case that the size of the driving unit 300 increases, since a volume of a space occupied by the driving unit 300 increases, a size of the electronic device 101 increases, and designing may be difficult. In a case that the electronic device 101 according to an example embodiment is implemented as a wearable device that may be worn by the user, it may be inconvenient for the user to wear due to the large size of the electronic device 101.

The electronic device 101 according to an example embodiment may have a structure capable of reducing the size of the driving unit 300. According to the structure, the size of the electronic device 101 may decrease. Hereinafter, the electronic device 101 including the driving unit 300 having a reduced size will be described with reference to the drawings.

In describing the following examples, the same reference numerals are given to the same component, and an overlapping description may be omitted. In the present disclosure, "operatively connected" may refer to, when one component operates, a relationship in which an operation of another component is performed based on the operation. The one component and the other component may be directly connected or indirectly connected through one or more structures. For example, the description that "one component is connected to another component" may include all cases in which the one component is directly connected to the other component, or indirectly connected through the one or more structures, unless otherwise stated.

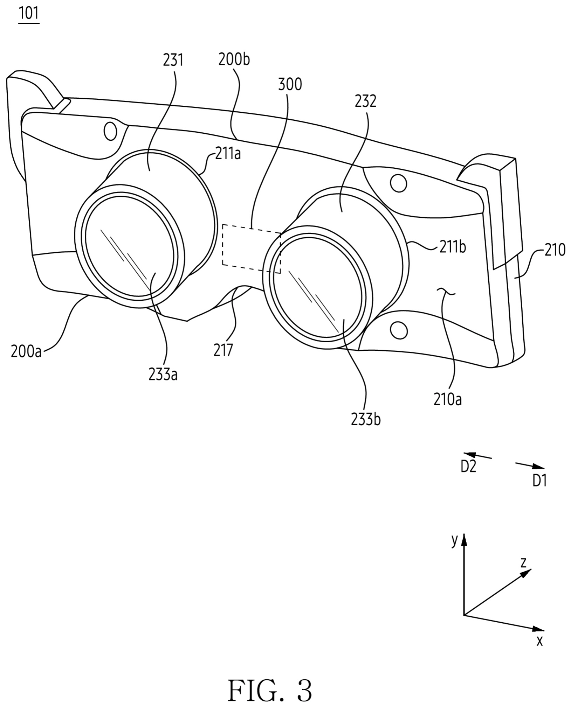

FIG. 3 illustrates an electronic device according to an example embodiment.

An electronic device 101 illustrated in FIG. 3 may include a wearable device that may be worn on a part of a body of a user. For example, the electronic device 101 may include an electronic device 101 that may provide augmented reality (AR), virtual reality (VR), or mixed reality (MR) in which augmented reality and virtual reality are mixed to the user wearing the electronic device 101. For example, the electronic device 101 may include a device including a head mounted display (HMD) that may be mounted on a head of the user, a video see through (VST) device, an optical see through (OST) device, a pass through device, and/or AR glass.

Referring to FIG. 3, the electronic device 101 according to an example embodiment may include a first lens 233a, a second lens 233b, and a driving unit 300. The electronic device 101 according to an example embodiment may further include components described with reference to FIGS. 2A and 2B.

According to an example embodiment, the first lens 233a and the second lens 233b may be configured to refract light provided from at least one display (e.g., the at least one display 240 of FIG. 2B). When the electronic device 101 is worn by the user, since a distance between the at least one display 240 and eyes of the user is short, the user may have difficulty in visually recognizing visual information provided from the at least one display 240. The first lens 233a and the second lens 233b may be configured to refract the light provided from the at least one display 240 so that the user may visually recognize the visual information displayed on the at least one display 240. For example, the first lens 233a and the second lens 233b may include an ultra-wide-angle lens (e.g., a fisheye lens) for expanding an angle of view of the user and/or a pancake lens composed of multiple lenses. For example, the pancake lens may be disposed inside a first barrel 231 and a second barrel 232, and a glass for protecting the lenses 233a and 233b may be disposed outside the first barrel 231 and the second barrel 232. However, it is not limited thereto.

For example, in a state in which the electronic device 101 is worn on the user, the first lens 233a and the second lens 233b may face a face of the user. Light provided from the at least one display 240 providing augmented reality, virtual reality, and/or mixed reality may be refracted while passing through the lens. The light refracted through the lens may provide a three-dimensional virtual reality to the user.

According to an example embodiment, each of the first lens 233a and the second lens 233b may face pupils of the user. For example, the second lens 233b may be spaced apart from the first lens 233a in a first direction D1 (e.g., in a +x direction). For example, the first lens 233a may face a left eye of the user, and the second lens 233b may face a right eye of the user, but it is not limited thereto.

For example, when the electronic device 101 is worn by the user, a first surface 210a of a housing 210 may face the face of the user. The housing 210 may include a first driving hole 211a for the first lens 233a and a second driving hole 211b for the second lens 233b. The first barrel 231 including the first lens 233a may be movable in the first driving hole 211a, and the second barrel 232 including the second lens 233b may be movable in the second driving hole 211b.

According to an example embodiment, the driving unit 300 may be configured to adjust a distance between the first lens 233a and the second lens 233b. The distance between the first lens 233a and the second lens 233b may be adjusted by movement of the first barrel 231 and the second barrel 232. For example, in a case that light emitted from the at least one display 240 is not aligned with the eyes of the user, the user may have difficulty in visually recognizing the visual information provided from the at least one display 240. Additionally, it may cause dizziness, headaches, or physical tension in the user. The driving unit 300 may be configured to adjust the distance between the first lens 233a and the second lens 233b to provide the light emitted from the at least one display 240 to the pupils of the user. For example, the driving unit 300 may be configured to adjust the distance between the first lens 233a and the second lens 233b by causing movement of the first barrel 231 and the second barrel 232. For example, a surface of a housing (e.g., the housing 210 of FIG. 3) facing the face of the user wearing the electronic device 101 may be bent to correspond to the face of the user. When the first barrel 231 and the second barrel 232 are moved, moving paths of the first barrel 231 and the second barrel 232 may form a curve along the bent surface of the housing 210. However, it is not limited thereto.

For example, according to a body structure of the user, an inter pupillary distance (IPD) may be different. As the driving unit 300 adjusts the distance between the first lens 233a and the second lens 233b, positions of the first lens 233a and the second lens 233b may be aligned with the IPD. According to an example embodiment, the driving unit 300 may be disposed between the first lens 233a and the second lens 233b.

According to an example embodiment, the housing 210 may include a recessed portion 217 formed between the first lens 233a and the second lens 233b. For example, the recessed portion 217 may be recessed from an edge 200a extending in the first direction D1 (e.g., the +x direction) toward another edge 200b opposite to the edge 200a. For example, when the electronic device 101 is worn by the user, the recessed portion 217 may correspond to a nose of the user. In order to accommodate the nose of the user, the recessed portion 217 may be recessed toward the first lens 233a and the second lens 233b. A size of the housing 210 may decrease by a space in which the recessed portion 217 is formed. According to an example embodiment, as a size of the driving unit 300 decreases, the housing 210 may include the recessed portion 217.

FIG. 4 illustrates a driving unit of an electronic device according to an example embodiment. FIG. 5 illustrates an example driving unit in which a case is omitted.

According to an example embodiment, a driving unit 300 may include a motor M, a first shaft 310, a second shaft 320, a third shaft 330, and/or a case 360. As illustrated in FIG. 4, the first shaft 310, the second shaft 320, and the third shaft 330 may be arranged in a direction perpendicular to a first direction D1 and a second direction D2 opposite to the first direction D1. For example, a first lens 233a and a second lens 233b may be arranged in a direction parallel to an x-axis, and the first shaft 310, the second shaft 320, and the third shaft 330 may be arranged in a y-axis direction. For example, a moving direction of a first barrel 231 including the first lens 233a and a second barrel 232 including the second lens 233b may be perpendicular (e.g., an x-axis direction) to an arrangement direction of the first shaft 310, the second shaft 320, and the third shaft 330.

According to an example embodiment, the first shaft 310 may be connected to the motor M. The first shaft 310 may be configured to rotate based on a rotation of the motor M. When the first shaft 310 rotates, the second shaft 320 and the third shaft 330 may rotate. By the rotation of the second shaft 320, the first barrel 231 may move in the first direction D1 (e.g., a +x direction) or the second direction D2 (e.g., a -x direction) opposite to the first direction D1. By the rotation of the third shaft 330, the second barrel 232 may move in the second direction D2 or the first direction D1. A distance between the first lens 233a and the second lens 233b may be adjusted by movement of the first barrel 231 including the first lens 233a and the second barrel 232 including the second lens 233b.

According to an example embodiment, the motor M may be configured to provide a driving force for adjusting the distance between the first lens 233a and the second lens 233b. For example, the motor M may cause the movement of the first barrel 231 and the second barrel 232. For example, the motor M may include a step motor M that may distinguish one rotation into a plurality of steps. For example, the motor M may be configured to convert an input signal provided from a processor into a mechanical motion. The motor M may be configured to rotate by a specified angle and maintain a state after the rotation according to a pulse of the input signal.

According to an example, the first shaft 310 may be connected to the motor M. For example, the first shaft 310 may extend from the motor M. For example, an end 310a of the first shaft 310 may be connected to the motor M. The first shaft 310 may straightly extend from the end 310a in a direction away from the motor M. Another end 310b of the first shaft 310 opposite to the end 310a may be connected to a first gear 301.

According to an example embodiment, the first shaft 310 connected to the motor M may be configured to rotate based on the rotation of the motor M. For example, when the motor M rotates clockwise or counterclockwise, the first shaft 310 connected to the motor M may rotate clockwise or counterclockwise. For example, the number of rotations of the first shaft 310 may be determined based on the number of rotational steps of the motor M.

According to an example embodiment, the second shaft 320 may be operatively connected to the first shaft 310 and the first lens 233a. The second shaft 320 may provide the driving force provided through the motor M as a driving force capable of moving the first barrel 231 including the first lens 233a. According to an example embodiment, the third shaft 330 may be operatively connected to the first shaft 310 and the second lens 233b. The third shaft 330 may provide the driving force as a driving force capable of moving the second barrel 232 including the second lens 233b. The second shaft 320 and the third shaft 330 may rotate using the driving force provided through the motor M.

According to an example embodiment, the first shaft 310 may be disposed between the second shaft 320 and the third shaft 330. For example, the second shaft 320 may be disposed above (e.g., a +y direction) the first shaft 310, and the third shaft 330 may be disposed below (e.g., a -y direction) the first shaft 310. For example, the first shaft 310, which is a rotation axis of the motor M, may be distinguished from the second shaft 320 operatively connected to the first barrel 231 and the third shaft 330 operatively connected to the second barrel 232. In the driving unit 300 according to an example embodiment, a structure for moving the first barrel 231 and the second barrel 232 may not be connected to one shaft. The driving unit 300 may include the first shaft 310 connected to the motor M, the second shaft 320 for moving the first barrel 231, and the third shaft 330 for moving the second barrel 232.

Referring to FIGS. 4 and 5, the driving unit 300 may include the first gear 301, a second gear 302, and a third gear 303. For example, the first gear 301 may be connected to the other end 310b opposite to the end 310a of the first shaft 310 connected to the motor M. When the first shaft 310 rotates, the first gear 301 may be configured to rotate based on the rotation of the first shaft 310. For example, the second gear 302 may be connected to an end 320a of the second shaft 320 and engaged with the first gear 301. For example, the third gear 303 may be connected to an end 330a of the third shaft 330 and may be engaged with the first gear 301. According to an example embodiment, since the first shaft 310, the second shaft 320, and the third shaft 330 are arranged along a y-axis, the first gear 301, the second gear 302, and the third gear 303 may also be arranged along the y-axis. For example, the first gear 301 may be disposed between the second gear 302 and the third gear 303.

According to an example embodiment, the case 360 may form an exterior of the driving unit 300. For example, the case 360 may at least partially cover the motor M, the first shaft 310, the second shaft 320, the third shaft 330, the first gear 301, the second gear 302, and the third gear 303. Components of the driving unit 300 may be fixed at a specified position in the case 360. For example, the case 360 may include a receiving portion 363 for accommodating the first shaft 310, the first gear 301, the second gear 302, and the third gear 303, and a first stepped portion 364 for fixing the second shaft 320 and/or a second stepped portion 365 for fixing the third shaft 330. For example, the first stepped portion 364 may be spaced upward (e.g., the +y direction) from the second stepped portion 365. For example, the receiving portion 363 may face the first stepped portion 364 and the second stepped portion 365. For example, the motor M may be positioned between the first stepped portion 364 and the second stepped portion 365. For example, the first shaft 310, the first gear 301, the second gear 302, and the third gear 303 may not be exposed to the outside by being accommodated in the receiving portion 363. The receiving portion 363 may reduce an inflow of a foreign substance (e.g., dust) to the first shaft 310, the first gear 301, the second gear 302, and the third gear 303.

According to an example embodiment, the driving unit 300 may include a first connecting structure 340 and a second connecting structure 350. According to an example embodiment, the first connecting structure 340 may be connected to each of the first barrel 231 and the second shaft 320. For example, a portion of the first connecting structure 340 may be coupled to the first barrel 231 including the first lens 233a. For example, another portion of the first connecting structure 340 may be coupled to the second shaft 320. For example, the second shaft 320 may penetrate the other portion of the first connecting structure 340.

According to an example embodiment, the second connecting structure 350 may be connected to each of the second barrel 232 and the third shaft 330. For example, some of the second connecting structure 350 may be coupled to the second barrel 232 including the second lens 233b. For example, another portion of the second connecting structure 350 may be coupled to the third shaft 330. For example, the third shaft 330 may penetrate the other portion of the second connecting structure 350.

Referring to FIG. 5, the first gear 301, the second gear 302, and the third gear 303 may rotate based on a rotation of the motor M. For example, as illustrated in FIG. 5, when the motor M rotates counterclockwise, the first shaft 310 connected to the motor M may also rotate counterclockwise. The first gear 301 connected to the first shaft 310 may rotate counterclockwise by the rotation of the first shaft 310. A rotational force of the first gear 301 may be transmitted to the second gear 302 and the third gear 303 through teeth of the second gear 302 and teeth of the third gear 303, which are engaged with teeth of the first gear 301.

According to an example embodiment, a rotational direction of the second gear 302 and a rotational direction of the third gear 303 may be opposite to a rotational direction of the first gear 301. For example, when the first gear 301 rotates counterclockwise, the second gear 302 and the third gear 303 may rotate clockwise. As the second gear 302 rotates clockwise, the second shaft 320 connected to the second gear 302 may rotate clockwise. As the third gear 303 rotates clockwise, the third shaft 330 connected to the third gear 303 may rotate clockwise. Unlike the example illustrated in FIG. 5, in a case that the motor M rotates clockwise, the second gear 302 and the third gear 303 may rotate counterclockwise. As the second gear 302 and the second gear 302 rotate counterclockwise, the second shaft 320 and the third shaft 330 may rotate counterclockwise. According to an example embodiment, the rotational direction of the second gear 302 may be the same as the rotational direction of the third gear 303.

According to an example embodiment, a screw thread may be formed on surfaces of the second shaft 320 and the third shaft 330. For example, the second shaft 320 may include a first screw thread 321 formed on the surface of the second shaft 320. For example, the third shaft 330 may include a second screw thread 331 formed on the surface of the third shaft 330. The first connecting structure 340 may be movable along the second shaft 320 by the first screw thread 321. The second connecting structure 350 may be movable along the third shaft 330 by the second screw thread 331.

According to an example embodiment, since each of the first connecting structure 340 and the second connecting structure 350 is connected to the first barrel 231 and the second barrel 232, the distance between the first lens 233a and the second lens 233b may be adjusted through movement of the first connecting structure 340 and the second connecting structure 350. For example, in order to adjust the distance between the first lens 233a and the second lens 233b, a moving direction of the first barrel 231 including the first lens 233a and a moving direction of the second barrel 232 including the second lens 233b may be opposite to each other. For example, as the first lens 233a and the second lens 233b move in a direction approaching each other or in a direction away from each other, the distance between the first lens 233a and the second lens 233b may be adjusted.

According to an example embodiment, in order to adjust the distance between the first lens 233a and the second lens 233b, the first screw thread 321 and the second screw thread 331 may be opposite to each other. For example, in a case that the first screw thread 321 is a right-handed thread (or a right-handed screw), the second screw thread 331 may be a left-handed thread (or a left-handed screw). For example, when the first screw thread 321 is a left-handed thread, the second screw thread 331 may be the right-handed thread.

According to an example embodiment, the first connecting structure 340 may be configured to move the first barrel 231 including the first lens 233a in the first direction D1 or the second direction D2, based on the rotation of the second shaft 320. For example, the second shaft 320 may penetrate the first connecting structure 340. When the second shaft 320 rotates, a relative position between the second shaft 320 and the first connecting structure 340 may be changed by the first screw thread 321 formed on the surface of the second shaft 320. For example, since a position of the second shaft 320 is fixed at a specified position within the case 360, when the second shaft 320 rotates, the first connecting structure 340 may move along the second shaft 320. The first connecting structure 340 may move in the first direction D1 or the second direction D2 along the second shaft 320. A moving direction of the first connecting structure 340 may be determined by a rotational direction of the second shaft 320 and a direction of the first screw thread 321. For example, as the motor M rotates counterclockwise, the second shaft 320 may rotate clockwise. In a case that the first screw thread 321 is the right-handed thread, as the second shaft 320 including the right-handed thread rotates clockwise, the first connecting structure 340 may move in a direction (e.g., the second direction D2) approaching the second gear 302. Conversely, in a case that the motor M rotates clockwise, the first connecting structure 340 may move in a direction (e.g., the first direction D1) away from the second gear 302. In a case that the first connecting structure 340 moves in the first direction D1 or the second direction D2, the first barrel 231 including the first lens 233a connected to the first connecting structure 340 may move in the first direction D1 or the second direction D2. For example, in a case that the first screw thread 321 is the left-handed thread, the moving direction of the first connecting structure 340 according to a rotational direction of the motor M may be opposite to the above description.

According to an example embodiment, the second connecting structure 350 may be configured to move the second barrel 232 including the second lens 233b in the second direction D2 or the first direction D1, based on the rotation of the third shaft 330. For example, the third shaft 330 may penetrate the second connecting structure 350. When the third shaft 330 rotates, a relative position between the third shaft 330 and the second connecting structure 350 may be changed by the second screw thread 331 formed on the surface of the third shaft 330. For example, since the third shaft 330 is fixed at a specified position within the case 360, when the third shaft 330 rotates, the second connecting structure 350 may move along the third shaft 330. The second connecting structure 350 may move in the first direction D1 or the second direction D2 along the third shaft 330. For example, in a case that the first screw thread 321 is the right-handed thread, the second screw thread 331 may be the left-handed thread. As the motor M rotates counterclockwise, the third shaft 330 may rotate clockwise. As the third shaft 330 including the left-handed thread rotates clockwise, the second connecting structure 350 may move in a direction (e.g., the first direction D1) away from the third gear 303. Conversely, in a case that the motor M rotates clockwise, the second connecting structure 350 may move in a direction (e.g., the second direction D2) approaching the third gear 303. In a case that the second connecting structure 350 moves in the second direction D2 or the first direction D1, the second barrel 232 including the second lens 233b connected to the second connecting structure 350 may also move in the second direction D2 or the first direction D1. For example, in a case that the second screw thread 331 is the right-handed thread, a moving direction of the second connecting structure 350 according to the rotational direction of the motor M may be opposite to the above description.

According to an example embodiment, since the rotational direction of the second gear 302 and the rotational direction of the third gear 303 are the same, and the direction of the first screw thread 321 and the direction of the second screw thread 331 are opposite, the moving direction of the first connecting structure 340 may be opposite to the moving direction of the second connecting structure 350. For example, in a case that the first connecting structure 340 moves in the first direction D1, the second connecting structure 350 may move in the second direction D2. For example, in a case that the first connecting structure 340 moves in the second direction D2, the second connecting structure 350 may move in the first direction D1.

According to an example embodiment, the moving direction of the first barrel 231 connected to the first connecting structure 340 may correspond to the moving direction of the first connecting structure 340. The moving direction of the second barrel 232 connected to the second connecting structure 350 may correspond to the moving direction of the second connecting structure 350. According to an example embodiment, the moving direction of the first barrel 231 may be opposite to the moving direction of the second barrel 232. According to an example embodiment, in a case that the first barrel 231 moves in the first direction D1 by the first connecting structure 340, the second barrel 232 may move in the second direction D2 by the second connecting structure 350. In a case that the first barrel 231 moves in the second direction D2, the second barrel 232 may move in the first direction D1. In a case that the first barrel 231 moves in the first direction D1 and the second barrel 232 moves in the second direction D2, the distance between the first lens 233a and the second lens 233b may decrease. In a case that the first barrel 231 moves in the second direction D2 and the second barrel 232 moves in the first direction D1, the distance between the first lens 233a and the second lens 233b may increase. According to an example embodiment, the distance between the first lens 233a and the second lens 233b may be adjusted through an operation of the driving unit 300.

According to an example embodiment, the driving unit 300 may include a first guide 370 guiding the movement of the first connecting structure 340 and a second guide 380 guiding the movement of the second connecting structure 350. For example, the first guide 370 may penetrate the first connecting structure 340 and extend parallel to the second shaft 320. A portion of the first guide 370 may be fixed to the first stepped portion 364, and another portion of the first guide 370 may be fixed to the receiving portion 363. Since the fixed first guide 370 penetrates the first connecting structure 340, the first connecting structure 340 may be guided in an extending direction of the first guide 370 during movement. When the first connecting structure 340 moves along the second shaft 320, the first guide 370 may guide the movement of the first connecting structure 340 to reduce separation of the first connecting structure 340 from the second shaft 320. For example, the second guide 380 may penetrate the second connecting structure 350 and extend parallel to the third shaft 330. A portion of the second guide 380 may be fixed to the second stepped portion 365, and another portion of the second guide 380 may be fixed to the receiving portion 363. Since the fixed second guide 380 penetrates the second connecting structure 350, the second connecting structure 350 may be guided in an extending direction of the second guide 380 during movement. When the second connecting structure 350 moves along the third shaft 330, the second guide 380 may guide the movement of the second connecting structure 350 to reduce separation of the second connecting structure 350 from the third shaft 330.

For example, the distance between the first lens 233a and the second lens 233b may be adjusted based on a user input. For example, a user wearing an electronic device 101 may provide a user input through a visual object (e.g., a user interface) displayed on a screen provided from a display (e.g., the at least one display 240 of FIG. 2B). For example, when the user provides a user input for adjusting the distance between the first lens 233a and the second lens 233b through the visual object displayed on the screen, the driving unit 300 may adjust the distance based on the user input. For example, when the user provides a user input for changing the distance to about 62mm in a state in which the distance between the first lens 233a and the second lens 233b is fixed at about 60mm, the driving unit 300 may change the distance to about 62mm based on the user input.

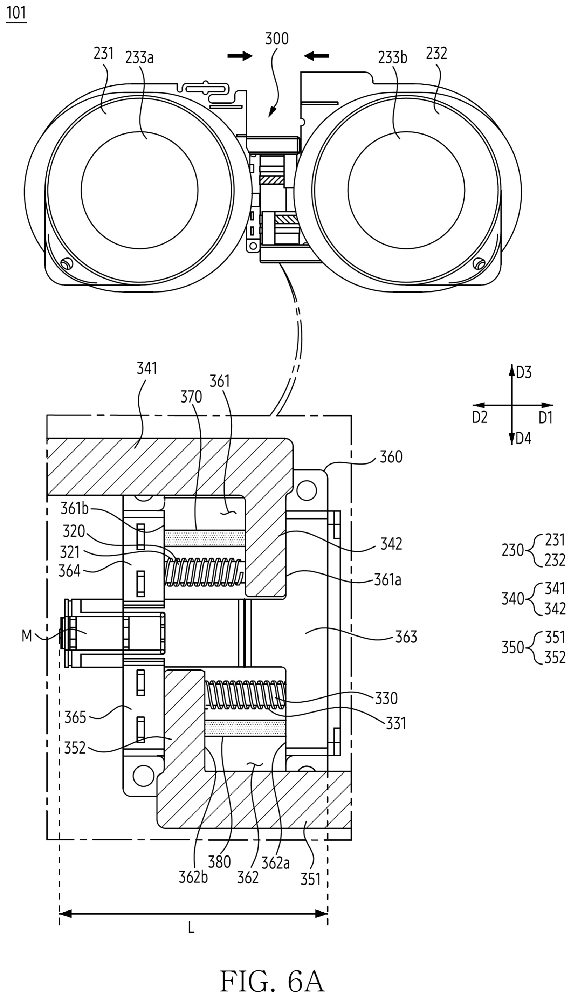

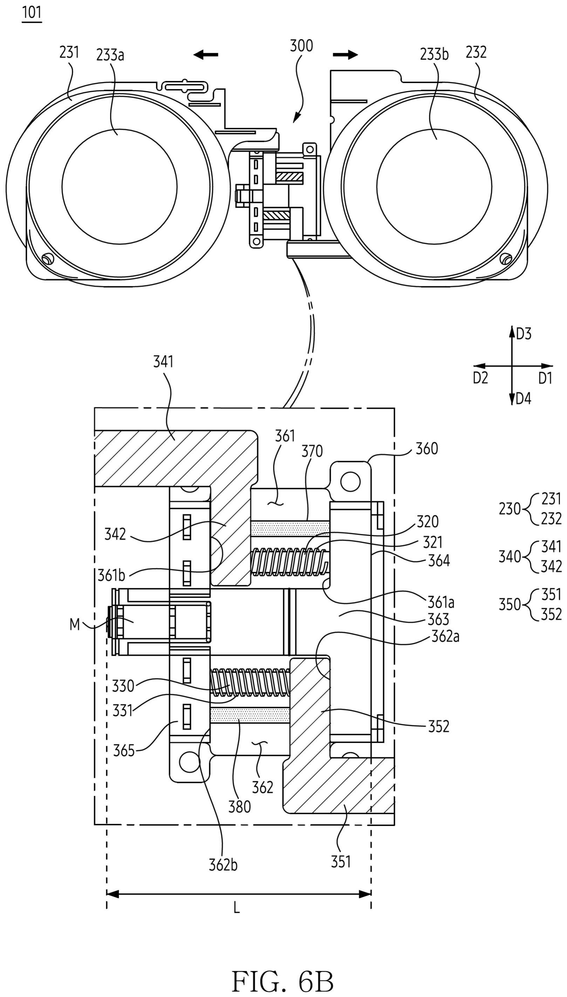

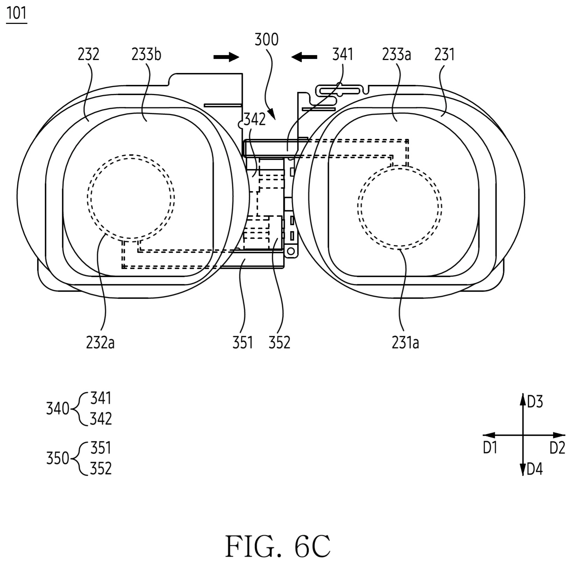

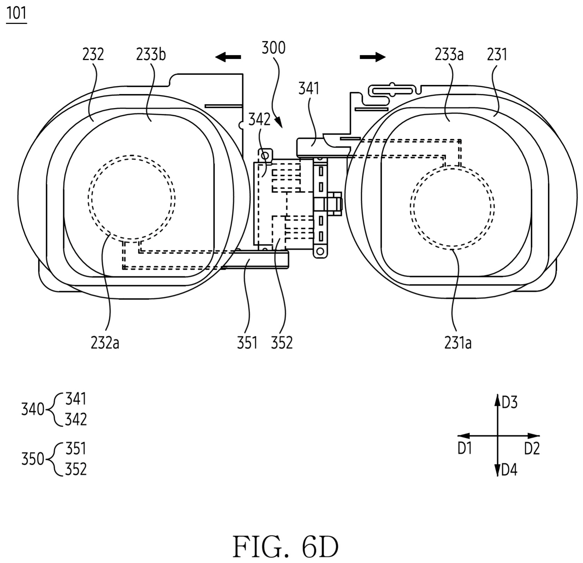

FIG. 6A illustrates an electronic device according to an example embodiment in a state in which a distance between a first lens and a second lens is decreased. FIG. 6B illustrates an electronic device according to an example embodiment in a state in which a distance between a first lens and a second lens is increased. FIG. 6C is a diagram of the electronic device illustrated in FIG. 6A as viewed from an opposite side. FIG. 6D is a diagram of the electronic device illustrated in FIG. 6B as viewed from an opposite side.

Referring to FIG. 6A, an electronic device 101 according to an example embodiment may include a lens barrel 230. The lens barrel 230 may be configured to be movable together with a first lens 233a and a second lens 233b. For example, the lens barrel 230 may include a first barrel 231 and a second barrel 232. The first barrel 231 may be coupled to the first lens 233a by at least partially surrounding the first lens 233a. The second barrel 232 may be coupled to the second lens 233b by at least partially surrounding the second lens 233b. For example, the first lens 233a may be included in the first barrel 231, and the second lens 233b may be included in the second barrel 232.

According to an example embodiment, a case 360 may include a first recess 361 and a second recess 362. For example, the first recess 361 may be formed between a receiving portion 363 and a first stepped portion 364. A second shaft 320 and a first connecting structure 340 may be positioned in the first recess 361. As the first recess 361 for the second shaft 320 and the first connecting structure 340 is formed, a space between the first stepped portion 364 and the first recess 361 may be stepped. The second shaft 320 may be connected to a second gear 302 in the receiving portion 363, pass through the first recess 361, and be fixed into the first stepped portion 364. The first connecting structure 340 may be connected to a portion of the second shaft 320 exposed through the first recess 361. For example, the second recess 362 may be formed between the receiving portion 363 and a second stepped portion 365. A third shaft 330 and a second connecting structure 350 may be positioned in the second recess 362. As the second recess 362 for the third shaft 330 and the second connecting structure 350 is formed, a space between the second stepped portion 365 and the second recess 362 may be stepped. The third shaft 330 may be connected to a third gear 303 in the receiving portion 363, pass through the second recess 362, and be fixed into the second stepped portion 365. The second connecting structure 350 may be connected to a portion of the third shaft 330 exposed through the second recess 362.

According to an example embodiment, a movement range of the first connecting structure 340 may be limited by the first recess 361, and a movement range of the second connecting structure 350 may be limited by the second recess 362. For example, since the first connecting structure 340 is movable along the second shaft 320 in the first recess 361, the movement range of the first connecting structure 340 may be limited by a length of the first recess 361. For example, the first connecting structure 340 may be configured to be movable from an end 361a of the first recess 361 to another end 361b of the first recess 361 along the second shaft 320 exposed through the first recess 361. For example, the first recess 361 may be formed between the receiving portion 363 in which a second gear (e.g., the second gear 302 of FIG. 4) is accommodated and the first stepped portion 364. The end 361a may be an end portion of the first recess 361 contacted with the receiving portion 363, and the other end 361b may be an end portion of the first recess 361 contacted with the first stepped portion 364.

For example, a movement of the first connecting structure 340 in a first direction D1 may be limited since the first connecting structure 340 is not movable in the first direction D1 by being blocked by the receiving portion 363, when the first connecting structure 340 contacted with the end 361a of the first recess 361. For example, a movement of the first connecting structure 340 in a second direction D2 may be limited since it is not movable in the second direction D2 by being blocked by the first stepped portion 364, when the first connecting structure 340 contacted with the other end 361b of the first recess 361.

For example, since the second connecting structure 350 is movable along the third shaft 330 in the second recess 362, the movement range of the second connecting structure 350 may be limited by a length of the second recess 362. For example, the second connecting structure 350 may be configured to be movable from an end 362a of the second recess 362 to another end 362b of the second recess 362 along the third shaft 330 exposed through the second recess 362. For example, the second recess 362 may be formed between the receiving portion 363 in which a third gear (e.g., the third gear 303 of FIG. 4) is accommodated and the second stepped portion 365. The end 362a may be an end portion of the second recess 362 contacted with the receiving portion 363, and the other end 362b may be an end portion of the second recess 362 contacted with the second stepped portion 365.

For example, a movement of the second connecting structure 350 in the first direction D1 may be limited since the second connecting structure 350 is not movable in the first direction D1 by being blocked by the receiving portion 363, when the second connecting structure 350 contacted with the end 362a of the second recess 362. For example, a movement of the second connecting structure 350 in the second direction D2 may be limited since the second connecting structure 350 is not movable in the second direction D2 by being blocked by the second stepped portion 365, when the second connecting structure 350 contacted with the other end 362b of the second recess 362. As illustrated in FIG. 6A, a state in which the first connecting structure 340 is contacted with the end 361a of the first recess 361 and the second connecting structure 350 is contacted with the other end 362b of the second recess 362 may indicate a state in which a distance between the first lens 233a and the second lens 233b is minimal. As illustrated in FIG. 6B, a state in which the first connecting structure 340 is contacted with the other end 361b of the first recess 361 and the second connecting structure 350 is contacted with the end 362a of the second recess 362 may indicate a state in which the distance between the first lens 233a and the second lens 233b is maximum.

According to an example embodiment, the first connecting structure 340 may be connected to the first barrel 231, and the second connecting structure 350 may be connected to the second barrel 232. The first barrel 231 may move according to the movement of the first connecting structure 340, and the second barrel 232 may move according to the movement of the second connecting structure 350. Since the movement of the first barrel 231 may be accompanied by a movement of the first lens 233a, and the movement of the second barrel 232 may be accompanied by a movement of the second lens 233b, the distance between the first lens 233a and the second lens 233b may be adjusted.

According to an example embodiment, the second shaft 320 and the third shaft 330 may be arranged in a direction perpendicular to a direction (e.g., the first direction D1 and/or the second direction D2) in which the first lens 233a and the second lens 233b are arranged. For example, the second shaft 320 may be spaced apart from the third shaft 330 in a third direction D3. For example, the third shaft 330 may be spaced apart from the second shaft 320 in a fourth direction D4. Since the second shaft 320 and the third shaft 330 are arranged in the direction perpendicular to the direction in which the first lens 233a and the second lens 233b are arranged, a length L of a driving unit 300 may decrease. For example, in a case that the second shaft 320 and the third shaft 330 are implemented as one shaft, the length L of the driving unit 300 may be longer than a length in which a length of the second shaft 320 and a length of the third shaft 330 are combined. Since the driving unit 300 is disposed between the first lens 233a and the second lens 233b, in a case that the length L of the driving unit 300 gets longer, a size between the first lens 233a and the second lens 233b in which the driving unit 300 is disposed may increase, and designing may be limited. According to an example embodiment, as a size of the driving unit 300 decreases, a size of the electronic device 101 may decrease, and designing may be facilitated.

For example, as the size of the driving unit 300 decreases, a housing 210 may include a recessed portion (e.g., the recessed portion 217 of FIG. 3). For example, in order to form the recessed portion 217, a space that may be removed between the first lens 233a and the second lens 233b may be required. In a case that the size of the driving unit 300 disposed between the first lens 233a and the second lens 233b is large, it may be difficult to form the recessed portion 217 because it is difficult to secure a space capable of forming the recessed portion 217. According to an example embodiment, as the size of the driving unit 300 decreases, the space capable of forming the recessed portion 217 may be more easily secured. When a user wears the electronic device 101 on a face, as the recessed portion 217 is supported by a nose, the electronic device 101 may be stably worn by the user, and the user may comfortably wear the electronic device 101. For example, a pad (e.g., the pad 213 of FIG. 2A) may be disposed in the recessed portion 217.

According to an example embodiment, since the second shaft 320 and the third shaft 330 are arranged in the direction perpendicular to the direction in which the first lens 233a and the second lens 233b are arranged, the first connecting structure 340 and the second connecting structure 350 may be opposite to each other with respect to the first shaft 310.

According to an example embodiment, the first connecting structure 340 may include a first body 341 and a second body 342. The first body 341 may extend from the first barrel 231 in the first direction D1. For example, the first body 341 may extend from the first barrel 231 toward the second barrel 232. The second body 342 may extend from the first body 341 and may be connected to the second shaft 320. For example, the second shaft 320 may penetrate the second body 342.

According to an example embodiment, the second connecting structure 350 may include a third body 351 and a fourth body 352. The third body 351 may extend from the second barrel 232 in the second direction D2. For example, the third body 351 may extend from the second barrel 232 toward the first barrel 231. The fourth body 352 may extend from the third body 351 and may be connected to the third shaft 330. For example, the third shaft 330 may penetrate the fourth body 352.

According to an example embodiment, a direction in which the second body 342 extends from the first body 341 may be opposite to a direction in which the fourth body 352 extends from the third body 351. For example, the first body 341 may be spaced apart from the second shaft 320 in the third direction D3, and the second body 342 may extend from the first body 341 in the fourth direction D4. For example, the third body 351 may be spaced apart from the third shaft 330 in the fourth direction D4, and the fourth body 352 may extend from the third body 351 in the third direction D3. In a structure for decreasing the length of the driving unit 300, since the first connecting structure 340 and the second connecting structure 350 have opposite structures with respect to the first shaft 310, a structure for moving the first barrel 231 including the first lens 233a and the second barrel 232 including the second lens 233b may be formed. For example, in order to decrease the size of the driving unit 300, the first shaft 310 may be disposed between the second shaft 320 and the third shaft 330. Since the first connecting structure 340 and the second connecting structure 350 have structures opposite to each other with respect to the first shaft 310, the size of the driving unit 300 may decrease.

According to an example embodiment, a motor M may rotate in a rotational direction (e.g., clockwise) or another rotational direction (e.g., counterclockwise) opposite to the rotational direction. For example, in a state in which the user wears the electronic device 101, the user may provide a user input for rotating the motor M. The motor M may rotate in the rotational direction or the other rotational direction, based on receiving the user input.

According to an example embodiment, the distance between the first lens 233a and the second lens 233b may be adjusted based on the rotation of the motor M in the rotational direction or the other rotational direction. For example, when the motor M rotates in the rotational direction, the distance between the first lens 233a and the second lens 233b may decrease. For example, when the motor M rotates in the other rotational direction, the distance between the first lens 233a and the second lens 233b may increase. The user may control the motor M so that the distance between the first lens 233a and the second lens 233b corresponds to an inter pupillary distance (IPD) of the user.

Referring to FIG. 6A, when the motor M rotates in the rotational direction, the second shaft 320 and the third shaft 330 may rotate in the other rotational direction opposite to the rotational direction. As described with reference to FIG. 5, when the first shaft 310 rotates, the first gear 301 rotates, and the second gear 302 and the third gear 303 engaged with the first gear 301 may rotate. The second shaft 320 and the third shaft 330 may rotate by the rotation of the second gear 302 and the third gear 303.

According to an example embodiment, a direction of a first screw thread 321 of the second shaft 320 and a direction of a second screw thread 331 of the third shaft 330 may be opposite to each other. When the motor M rotates in the rotational direction, the second shaft 320 and the third shaft 330 may rotate in the other rotational direction opposite to the rotational direction. For example, a rotational direction of the second shaft 320 and a rotation direction of the third shaft 330 may be the same. Since the direction of the first screw thread 321 and the direction of the second screw thread 331 are opposite to each other, a moving direction of the first connecting structure 340 and a moving direction of the second connecting structure 350 may be opposite to each other.

For example, in a case that the motor M rotates in the rotational direction, the second shaft 320 penetrating the second body 342 of the first connecting structure 340 may rotate. As the second shaft 320 rotates, the first connecting structure 340 may move along the second shaft 320 by the first screw thread 321. For example, the first connecting structure 340 may move in the first direction D1 along the second shaft 320. The first connecting structure 340 moving in the first direction D1 may move the first barrel 231 and the first lens 233a in the first direction D1. For example, when the motor M rotates in the rotational direction, the third shaft 330 penetrating the fourth body 352 of the second connecting structure 350 may rotate. As the third shaft 330 rotates, the second connecting structure 350 may move along the third shaft 330 by the second screw thread 331. Since the direction of the second screw thread 331 is opposite to the direction of the first screw thread 321, and the rotational direction of the second shaft 320 is the same as the rotational direction of the third shaft 330, the moving direction of the second connecting structure 350 may be opposite to the moving direction of the first connecting structure 340. For example, the second connecting structure 350 may move in the second direction D2 along the third shaft 330. The second connecting structure 350 moving in the second direction D2 may move the second barrel 232 and the second lens 233b in the second direction D2. For example, as the first barrel 231 including the first lens 233a moves in the first direction D1 and the second barrel 232 including the second lens 233b moves in the second direction D2, the distance between the first lens 233a and the second lens 233b may decrease.

Referring to FIG. 6B, when the motor M rotates in the other rotational direction, the second shaft 320 and the third shaft 330 may rotate in the rotational direction opposite to the other rotational direction. When the motor M rotates in the other rotational direction, the second shaft 320 and the third shaft 330 may rotate in the rotational direction opposite to the other rotational direction. The rotational direction of the second shaft 320 and the rotational direction of the third shaft 330 may be the same. Since the direction of the first screw thread 321 and the direction of the second screw thread 331 are opposite to each other, the moving direction of the first connecting structure 340 and the moving direction of the second connecting structure 350 may be opposite to each other.

For example, in a case that the motor M rotates in the other rotational direction, the second shaft 320 penetrating the second body 342 of the first connecting structure 340 may rotate. As the second shaft 320 rotates, the first connecting structure 340 may move along the second shaft 320 by the first screw thread 321. For example, the first connecting structure 340 may move in the second direction D2 along the second shaft 320. The first connecting structure 340 moving in the second direction D2 may move the first barrel 231 and the first lens 233a in the second direction D2. For example, when the motor M rotates in the other rotational direction, the third shaft 330 penetrating the fourth body 352 of the second connecting structure 350 may rotate. As the third shaft 330 rotates, the second connecting structure 350 may move along the third shaft 330 by the second screw thread 331. Since the direction of the second screw thread 331 is opposite to the direction of the first screw thread 321, and the rotational direction of the second shaft 320 is the same as the rotational direction of the third shaft 330, the moving direction of the second connecting structure 350 may be opposite to the moving direction of the first connecting structure 340. For example, the second connecting structure 350 may move in the first direction D1 along the third shaft 330. The second connecting structure 350 moving in the first direction D1 may move the second barrel 232 and the second lens 233b in the first direction D1. For example, as the first barrel 231 including the first lens 233a moves in the second direction D2 and the second barrel 232 including the second lens 233b moves in the first direction D1, the distance between the first lens 233a and the second lens 233b may increase.

As described above, the driving unit 300 may be configured to adjust the distance between the first lens 233a and the second lens 233b. The first connecting structure 340 for moving the first lens 233a may be connected to the second shaft 320, and the second connecting structure 350 for moving the second lens 233b may be connected to the third shaft 330 different from the second shaft 320. For example, the first lens 233a and the second lens 233b may not be connected to one shaft, but may be connected to separate shafts (e.g., the second shaft 320 and the third shaft 330). The first shaft 310, the second shaft 320, and the third shaft 330 may be arranged in a direction (e.g., a y-axis direction) perpendicular to the direction in which the first lens 233a and the second lens 233b are arranged (e.g., an x-axis direction). Since the driving unit 300 having the structure may have a relatively small size, the overall size of the electronic device 101 may be smaller, and designing of the electronic device 101 may be facilitated.

Referring to FIGS. 6C and 6D, a direction in which the first connecting structure 340 is connected to the first barrel 231 and a direction in which the second connecting structure 350 is connected to the second barrel 232 may be different.

For example, the first connecting structure 340 may be coupled in the fourth direction D4 with respect to a coupling portion 231a of the first barrel 231. For example, the first body 341 may be connected to the coupling portion 231a inside the first barrel 231 by being bent in the fourth direction D4 inside the first barrel 231. For example, the first body 341 may extend by penetrating inside the first barrel 231 and may be bent in the fourth direction D4 inside the first barrel 231. As the first body 341 bent in the fourth direction D4 by is coupled to the coupling portion 231a inside the first barrel 231, the first connecting structure 340 and the first barrel 231 may be connected.

For example, the second connecting structure 350 may be coupled in the third direction D3 with respect to a coupling portion 232a of the second barrel 232. For example, the third body 351 may be connected to the coupling portion 232a inside the second barrel 232 by being bent in the third direction D3 inside the second barrel 232. For example, the third body 351 may extend by penetrating inside the second barrel 232, and may be bent in the third direction D3 inside the second barrel 232. As the third body 351 bent in the third direction D3 is coupled to the coupling portion 232a inside the second barrel 232, that the second connecting structure 350 and the second barrel 232 may be connected.

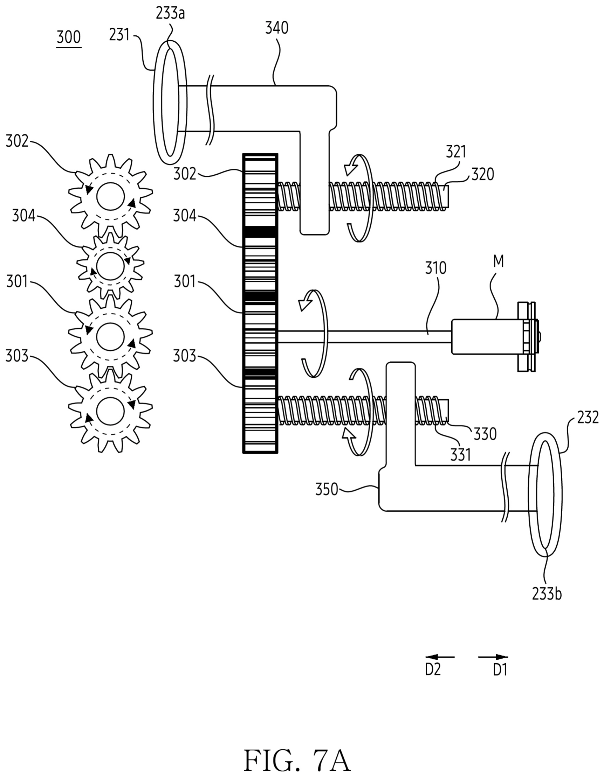

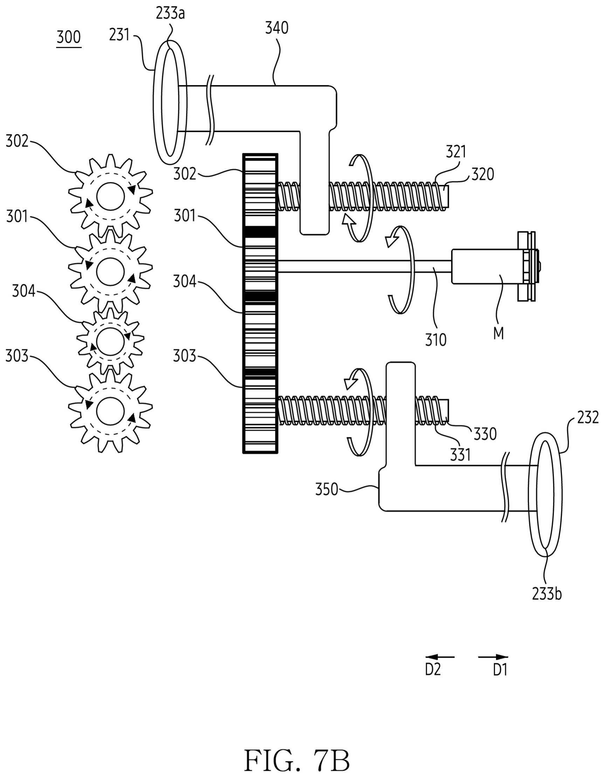

FIGS. 7A and 7B illustrate an example driving unit in which a case is omitted.

Referring to FIG. 7A, a driving unit 300 may include a fourth gear 304 disposed between a first gear 301 and a second gear 302. In a case of the driving unit 300 illustrated in FIG. 7A, a direction of a first screw thread 321 formed on a surface of a second shaft 320 may be the same as a direction of a second screw thread 331 formed on a surface of a third shaft 330.

According to an example embodiment, the fourth gear 304 may be disposed between the first gear 301 and the second gear 302. The fourth gear 304 may be engaged with each of the first gear 301 and the second gear 302. For example, as a motor M rotates, the first gear 301 connected to a first shaft 310 may rotate. When the first gear 301 rotates, a third gear 303 and the fourth gear 304 engaged with the first gear 301 may rotate. As the third gear 303 rotates, the third shaft 330 connected to the third gear 303 may rotate. As the fourth gear 304 rotates, the second gear 302 engaged with the fourth gear 304 may rotate. As the second gear 302 rotates, the second shaft 320 connected to the second gear 302 may rotate.

Referring to FIG. 7A, when the motor M rotates counterclockwise, the first shaft 310 connected to the motor M may also rotate counterclockwise. The first gear 301 may rotate counterclockwise by the rotation of the first shaft 310. The third gear 303 and the fourth gear 304 engaged with the first gear 301 may rotate clockwise opposite to a rotational direction of the first gear 301. As the third gear 303 rotates clockwise, the third shaft 330 may rotate clockwise. The second gear 302 engaged with the fourth gear 304 may rotate counterclockwise opposite to a rotational direction of the fourth gear 304. As the second gear 302 rotates counterclockwise, the second shaft 320 may rotate counterclockwise. According to an example embodiment, a rotational direction of the second gear 302 may be different from the rotation direction of the fourth gear 304.

According to an example embodiment, the direction of the first screw thread 321 formed on the surface of the second shaft 320 may be the same as the direction of the second screw thread 331 formed on the surface of the third shaft 330. Since the rotational direction of the second gear 302 is different from a rotational direction of the third gear 303, when the motor M rotates in a rotational direction, moving directions of a first connecting structure 340 and a second connecting structure 350 may be opposite to each other. For example, in a case that the first screw thread 321 and the second screw thread 331 are right-handed threads, as the motor M rotates counterclockwise, the second shaft 320 may rotate counterclockwise, and the third shaft 330 may rotate clockwise. As the second shaft 320 including the right-handed thread rotates counterclockwise, the first connecting structure 340 may move in a direction (e.g., the first direction D1) away from the second gear 302. As the third shaft 330 including the right-handed thread rotates clockwise, the second connecting structure 350 may move in a direction (e.g., the second direction D2) approaching the third gear 303. Conversely, in a case that the motor M rotates clockwise, the first connecting structure 340 may move in the direction (e.g., the second direction D2) approaching the second gear 302, and the second connecting structure 350 may move in the direction (e.g., the first direction D1) away from the third gear 303.

As described above, when the direction of the first screw thread 321 and the direction of the second screw thread 331 are the same, it may adjust the moving directions of the first connecting structure 340 and the second connecting structure 350 through an additional gear (e.g., the fourth gear 304). Since the first connecting structure 340 may be configured to move a position of a first lens 233a and the second connecting structure 350 may be configured to move a position of a second lens 233b, a distance between the first lens 233a and the second lens 233b may be adjusted by a rotation of the motor M. For example, in a case that the motor M rotates counterclockwise, the distance between the first lens 233a and the second lens 233b may decrease, and in a case that the motor M rotates clockwise, the distance between the first lens 233a and the second lens 233b may increase. However, a change in the distance between the first lens 233a and the second lens 233b according to the rotational direction of the motor M is only example and it is not limited to the above description. For example, according to disposition and the number of fourth gears 304 to be added, a change in the distance according to the rotational direction of the motor M may vary.

For example, as illustrated in FIG. 7B, the fourth gear 304 may be disposed between the first gear 301 and the third gear 303. Referring to FIG. 7B, when the motor M rotates counterclockwise, the first gear 301 may rotate counterclockwise. The second gear 302 and the fourth gear 304 engaged with the first gear 301 may rotate clockwise opposite to the rotational direction of the first gear 301. The third gear 303 engaged with the fourth gear 304 may rotate counterclockwise. The second shaft 320 may rotate clockwise by the rotation of the second gear 302, and the third shaft 330 may rotate counterclockwise by the rotation of the third gear 303. As the second shaft 320 including the right-handed thread rotates clockwise, the first connecting structure 340 may move in a direction approaching the second gear 302. As the third shaft 330 including the right-handed thread rotates counterclockwise, the second connecting structure 350 may move in a direction away from the third gear 303. The distance between the first lens 233a and the second lens 233b may increase by the movement of the first connecting structure 340 and the movement of the second connecting structure 350. Conversely, in a case that the motor M rotates clockwise, the distance between the first lens 233a and the second lens 233b may decrease.

Although not illustrated, in a case that there are a plurality of additional gears (e.g., the fourth gear 304), the rotational directions of the second shaft 320 and the third shaft 330 may be determined by the plurality of added gears. According to the rotational directions of the second shaft 320 and the third shaft 330, the moving directions of the first connecting structure 340 and the second connecting structure 350 may be determined, and the distance between the first lens 233a and the second lens 233b may be adjusted.

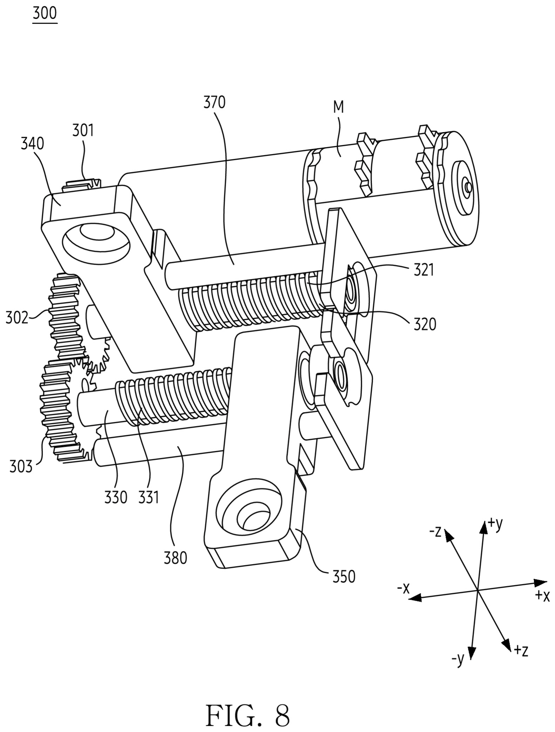

FIG. 8 illustrates an example driving unit in which a case is omitted.

A driving unit 300 described above has been described to include a structure in which a first gear 301 operatively coupled to a motor M is disposed between a second gear 302 and a third gear 303, but it is not limited thereto. For example, as illustrated in FIG. 8, the second gear 302 may be disposed between the first gear 301 and the third gear 303.

Referring to FIG. 8, the second gear 302 may be disposed between the first gear 301 and the third gear 303. For example, the second gear 302 may be engaged with the first gear 301 and the third gear 303. For example, the motor M may be positioned above (e.g., a +y direction) a second shaft 320, and a third shaft 330 may be positioned below (e.g., a -y direction) the second shaft 320. As the motor M rotates, the first gear 301 rotates, and a rotational force of the first gear 301 is transmitted to the second gear 302, the second gear 302 may rotate. As the second gear 302 rotates, the third gear 303 may rotate. The second shaft 320 may rotate by the rotation of the second gear 302, and the third shaft 330 may rotate by the rotation of the third gear 303. When the second shaft 320 rotates, a first connecting structure 340 may move along a first screw thread 321, and when the third shaft 330 rotates, a second connecting structure 350 may move along a second screw thread 331. For example, when the first gear 301 rotates counterclockwise, the second gear 302 engaged with the first gear 301 may rotate clockwise. As the second gear 302 rotates clockwise, the third gear 303 engaged with the second gear 302 may rotate counterclockwise. For example, a rotational direction of the second gear 302 may be opposite to a rotational direction of the third gear 303. Since the rotation directions of the second gear 302 and the third gear 303 are opposite to each other, directions of the first screw thread 321 and the second screw thread 331 may be the same.

Since the motor M is positioned above (e.g., the +y direction) the second shaft 320, the first connecting structure 340 coupled to the first screw thread 321 of the second shaft 320 may be disposed so as not to interfere with the motor M. For example, the first connecting structure 340 may be connected to face a rear direction (e.g., a -z direction) with respect to the second shaft 320 so as not to interfere with the motor M positioned above the second shaft 320. The second connecting structure 350 may be connected to face downward (e.g., the -y direction) with respect to the second shaft 330. As illustrated in FIG. 8, the first connecting structure 340 and the second connecting structure 350 may be disposed in directions perpendicular to each other.

The driving unit 300 illustrated in FIG. 8 has been described that the second gear 302 is disposed between the first gear 301 and the third gear 303, but it is not limited thereto. For example, the third gear 303 may be disposed between the first gear 301 and the second gear 302. In a case of the structure, the second connecting structure 350 may be connected in the rear direction (e.g., the -y direction) with respect to the third shaft 330, so as not to interfere with the motor M positioned below (e.g., -y direction) the third shaft 330. The first connecting structure 340 may be connected to face upward (e.g., the +y direction) with respect to the second shaft 330.

FIG. 9A illustrates an electronic device according to an example embodiment. FIG. 9B illustrates an example of a driving unit of the electronic device according to an example embodiment illustrated in FIG. 9A. FIG. 9C illustrates an electronic device according to an example embodiment. FIG. 9D illustrates an example of a driving unit of the electronic device according to an example embodiment illustrated in FIG. 9A.

Referring to FIG. 9A, an electronic device 101 according to an embodiment may include a controller 391a capable of manually adjusting a distance between a first lens 233a and a second lens 233b. For example, the controller 391a may be operatively connected to a first shaft 310 and configured to be rotatable by an external force. For example, at least a portion of the controller 391a may be exposed to the outside of a housing 210. A user may rotate the controller 391a by applying the external force to a portion of the controller 391a exposed to the outside of the housing 210. When the controller 391a rotates, as a rotational force is transmitted to a second gear (e.g., the second gear 302 of FIG. 9B) and a third gear (e.g., the third gear 303 of FIG. 9B), the distance between the first lens 233a and the second lens 233b may be adjusted.

For example, the controller 391a may be exposed through an edge of the housing 210. For example, the controller 391a may be spaced apart in a direction (e.g., a second direction D2) toward a first lens 233a or in a direction (e.g., a first direction D1) toward the second lens 233b, from a recessed portion 217. For example, the at least a portion of the controller 391a may be exposed through the edge in a +x direction or a -x direction of the housing 210. When the controller 391a is positioned at the edge in the +x direction or the -x direction of the housing 210, the controller 391a may be arranged in a direction substantially parallel to an x-axis with respect to a first gear (e.g., the first gear 301 of FIG. 9B). When the controller 391a is arranged in the direction substantially parallel to the x-axis with respect to the first gear 301, a rotation axis of the controller 391a and a rotation axis of the first gear 301 may be substantially parallel. The electronic device 101 illustrated in FIG. 9A has been illustrated as including the controller 391a exposed to the edge in the +x direction of the housing 210, but a position of the controller 391a is not limited to the example illustrated in FIG. 9A.

Referring to FIG. 9B, the controller 391a may be connected to the first gear 301. For example, the controller 391a may be connected to the first gear 301 through a fourth shaft 392. The controller 391a having the above-described structure may be exposed through the edge in the +x direction or the - x direction of the housing (e.g., the housing 210 of FIG. 9A). When the user rotates the controller 391a by a hand, the controller 391a may rotate. As the controller 391a rotates, the first gear 301 connected to the controller 391a may rotate through the fourth shaft 392. As the first gear 301 rotates, the second gear 302 and the third gear 303 engaged with the first gear 301 may rotate. As the second gear 302 and the third gear 303 rotate, the distance between the first lens 233a and the second lens 233b may be adjusted.

Referring to FIG. 9C, a controller 391b may be exposed through an edge in a +y direction of the housing 210. For example, the controller 391b may be spaced apart from the recessed portion 217 in a direction (e.g., y-axis) perpendicular to a direction (e.g., x-axis) in which the first lens 233a and the second lens 233b are arranged. For example, at least a portion of the controller 391b may be exposed through the edge in the +y direction or a -y direction of the housing 210. In a case that the controller 391b is positioned at the edge in the +y direction or the -y direction of the housing 210, the controller 391b may be arranged in a direction substantially parallel to the y-axis with respect to a first gear (e.g., a first gear 301 of FIG. 9D). When the controller 391b is arranged in the direction substantially parallel to the y-axis with respect to the first gear 301, a rotation axis of the controller 391b and a rotation axis of the first gear 301 may be orthogonal. Since the rotation axis of the controller 391b and the rotation axis of the first gear 301 are orthogonal, an auxiliary gear (e.g., a first bevel gear 394 and/or a second bevel gear 395 of FIG. 9D) for transmitting a rotational force may be disposed between the controller 391b and the first gear 301.

Referring to FIG. 9D, the controller 391b may be connected to the first gear 301 through the auxiliary gear (e.g., the first bevel gear 394 and/or the second bevel gear 395). For example, a fourth shaft 392 connected to the first gear 301 may be connected to the first bevel gear 394. The controller 391b may be connected to a fifth shaft 393 connected to the second bevel gear 395 engaged with the first bevel gear 394. The controller 391b having the above-described structure may be exposed through an edge in the +y direction or the -y direction of a housing (e.g., the housing 210 of FIG. 9C). When the user manually rotates the controller 391b, the controller 391b may rotate. As the controller 391b rotates, the second bevel gear 395 connected to the controller 391b through the fifth shaft 393 may rotate. When the second bevel gear 395 rotates, as the first bevel gear 394 engaged with the second bevel gear 395 rotates, the fourth shaft 392 may rotate. As the fourth shaft 392 rotates, the first gear 301 connected to the fourth shaft 392 may rotate. According to the rotation of the first gear 301, a distance between a first lens 233a and a second lens 233b may be adjusted.

For example, in a case of the electronic device 101 capable of manually adjusting the distance between the first lens 233a and the second lens 233b, the motor M and the first shaft 310 may be omitted. For example, when the controllers 391a and 391b rotate, as the first gear (e.g., the first gear 301 of FIG. 9B) rotates through the fourth shaft (e.g., the fourth shaft 392 of FIG. 9B) that is operatively connected to the controllers 391a and 391b, the distance between the first lens 233a and the second lens 233b may be adjusted. However, it is not limited thereto. In a case of the electronic device 101 illustrated in FIGS. 9A and 9C, remaining components and operations except for a structure capable of providing a driving force through the controllers 391a and 391b instead of the motor M may be substantially the same as the electronic device 101 described with reference to FIGS. 2A to 8.

An electronic device (e.g., the electronic device 101 of FIG. 3) according to an example embodiment may comprise a first barrel (e.g., the first barrel 231 of FIG. 3) including a first lens (e.g., the first lens 233a of FIG. 3), a second barrel (e.g., the second barrel 232 of FIG. 3) including a second lens (e.g., the second lens 233b of FIG. 3), and a driving unit (e.g., the driving unit 300 of FIG. 3). The second lens may be spaced apart from the first lens in a first direction (e.g., the first direction D1 of FIG. 3). The driving unit may be disposed between the first lens and the second lens. The driving unit may be configured to adjust a distance between the first lens and the second lens. The driving unit may include a motor (e.g., the motor M of FIG. 4), a first shaft (e.g., the first shaft 310 of FIG. 4), a second shaft (e.g., the second shaft 320 of FIG. 4), and a third shaft (e.g., the third shaft 330 of FIG. 4). The first shaft may be connected to the motor. The first shaft may be configured to rotate based on a rotation of the motor. The second shaft may be operatively connected to the first barrel. The second shaft may be configured to move the first barrel including the first lens in the first direction or a second direction opposite to the first direction by rotating based on the rotation of the first shaft. The third shaft may be operatively connected to the second barrel. The third shaft may be configured to move the second barrel including the second lens in the first direction or the second direction by rotating based on the rotation of the first shaft. The first shaft, the second shaft, and the third shaft may be arranged in a direction (e.g., the third direction D3 or the fourth direction D4 of FIG. 6A) perpendicular to the first direction. According to an example embodiment of the present disclosure, it may have a structure capable of decreasing a size of the driving unit. For example, since the first shaft, the second shaft, and the third shaft are arranged in a direction perpendicular to a direction in which the first and second lenses are arranged, a length of the drive unit may decrease. According to an example embodiment, as the size of the driving unit decrease, a size of the electronic device may decrease, and designing may be simplified. In addition, a user may easily wear the electronic device.

According to an example embodiment, the first shaft may be disposed between the second shaft and the third shaft. According to an example embodiment of the present disclosure, the first shaft connected to the motor may be disposed between the second shaft for the second lens and a shaft for a third lens. According to the above structure, a structure related to the first lens may be symmetrical to a structure related to the second lens with respect to the first shaft. Through the structure, the size of the electronic device may decrease.

According to an example embodiment, it may include a first connecting structure (e.g., the first connecting structure 340 of FIG. 4) and a second connecting structure (e.g., the second connecting structure 350 of FIG. 4). The first connecting structure may be connected to each of the first barrel and the second shaft. The first connecting structure may be configured to move the first barrel including the first lens in the first direction or the second direction opposite to the first direction, based on a rotation of the second shaft. The second connecting structure may be connected to each of the second barrel and the third shaft. The second connecting structure may be configured to move the second barrel including the second lens in the second direction or the first direction based on a rotation of the third shaft. According to an example embodiment of the present disclosure, the electronic device may include the first connecting structure for moving the first lens and the second connecting structure for moving the second lens. The first connecting structure may move a position of the first lens by moving relative to the second shaft. The second connecting structure may move a position of the second lens by moving relative to the third shaft. According to an example embodiment, the distance between the first lens and the second lens may be adjusted through the first connecting structure and the second connecting structure. By adjusting the distance between the first lens and the second lens, the distance may correspond to an inter pupil distance (IPD) of the user.

According to an example embodiment, when the motor rotates in a rotational direction, the first connecting structure may move the first lens in the first direction along the second shaft, and the second connecting structure may move the second lens in the second direction along the third shaft. The distance may decrease by the movement. When the motor rotates in another rotational direction, the first connecting structure may move the first lens in the second direction along the second shaft, and the second connecting structure may move the second lens in the first direction along the third shaft. The distance may increase by the movement. According to an example embodiment of the present disclosure, the distance between the first lens and the second lens may be adjusted according to a rotational direction of the motor. The first connecting structure may be configured to move along the second shaft, and the second connecting structure may be configured to move along the third shaft. For example, in a case that the first lens and the second lens are configured to move by a single shaft, a length of the electronic device may increase. Since the second shaft related to the first lens and the third shaft related to the second lens are composed of components independent of each other, the size of the electronic device may decrease.

According to an example embodiment, the driving unit may include a case (e.g., the case 360 of FIG. 4). The case may be disposed between the first lens and the second lens. The motor, the first shaft, and the second shaft may be disposed in the case. The case may include a first recess (e.g., the first recess 361 of 6A) and a second recess (e.g., the second recess 362 of FIG. 6A). The second shaft and the first connecting structure may be at least partially disposed in the first recess. The third shaft and the second connecting structure may be at least partially disposed in the second recess. According to an example embodiment of the present disclosure, at least the portion of the second shaft may be positioned in the second recess, and at least a portion of the third shaft may be positioned in the third recess. According to an example embodiment of the present disclosure, a portion of the second shaft may be exposed through the first recess. The first connecting structure may be connected to the portion of the second shaft exposed through the first recess. A portion of the third shaft may be exposed through the second recess. The second connecting structure may be connected to the portion of the third shaft exposed through the second recess.

According to an example embodiment, the first connecting structure may be movable from an end of the first recess (e.g., the end 361a of FIG. 6A) to another end (e.g., the other end 361b of FIG. 6A) of the first recess. The second connecting structure may be movable from an end (e.g., the end 362a of FIG. 6A) of the second recess to another end (e.g., the other end 362b of FIG. 6A) of the second recess. According to an example embodiment of the present disclosure, a movement range of the first connecting structure may be limited by the first recess, and a movement range of the second connecting structure may be limited by the second recess. For example, since the first connecting structure is movable along the second shaft in the first recess, a length of the first recess may limit the movement range of the first connecting structure. For example, since the second connecting structure is movable along the third shaft in the second recess, a length of the second recess may limit the movement range of the second connecting structure.

According to an example embodiment, the driving unit may include a first guide (e.g., the first guide 370 of FIG. 4) and a second guide (e.g., the second guide 380 of FIG. 4). The first guide may penetrate the first connecting structure. The first guide may extend parallel to the second shaft. The first guide may guide the movement of the first connecting structure. The second guide may penetrate the second connecting structure. The second guide may extend parallel to the third shaft. The second guide may guide the movement of the second connecting structure. According to an example embodiment of the present disclosure, the first guide and the second guide may provide a stable movement of the first lens and the second lens. For example, the first connecting structure may be guided in an extending direction of the first guide when moving. When the first connecting structure moves along the second shaft, the first guide may guide the movement of the first connecting structure to reduce separation of the first connecting structure from the second shaft.

According to an example embodiment, the first connecting structure may include a first body (e.g., the first body 341 of FIG. 6A) and a second body (e.g., the second body 342 of FIG. 6A). The first body may extend from the first barrel in the first direction. The first body may be spaced apart from the second shaft. The second body may extend from the first body. The second guide may be connected to the second shaft. The second connecting structure may include a third body (e.g., the third body 343 of FIG. 6A) and a fourth body (e.g., the fourth body 344 of FIG. 6A). The third body may extend from the second barrel in the second direction. The third body may be spaced apart from the third shaft. The fourth body may extend from the third body. The fourth body may be connected to the third shaft.

According to an example embodiment, a direction in which the second body extends from the first body may be opposite to a direction in which the fourth body extends from the third body. According to an example embodiment of the present disclosure, the first connecting structure and the second connecting structure may have opposite structures with respect to the first shaft. Since the second shaft and the third shaft are arranged in the direction perpendicular to the arrangement direction of the first lens and the second lens, the first connecting structure and the second connecting structure may have structures opposite to each other with respect to the first shaft. The size of the driving unit may decrease by the structure.

According to an example embodiment, the second shaft may include a first screw thread (e.g., the first screw thread 321 of FIG. 4) formed on a surface of the second shaft. The third shaft may include a second screw thread (e.g., the second screw thread 331 of FIG. 4) formed on a surface of the third shaft. The second screw thread may have a direction opposite to a direction of the first screw thread. According to an example embodiment of the present disclosure, the first screw thread and the second screw thread may enable the movement of the first connecting structure and the second connecting structure. For example, the first connecting structure may be movable along the first shaft by the first screw thread. For example, the second connecting structure may be movable along the second shaft by the second screw thread.

According to an example embodiment, the driving unit may include a first gear (e.g., the first gear 301 of FIG. 4), a second gear (e.g., the second gear 302 of FIG. 4), and a third gear (e.g., the third gear 303 of FIG. 4). The first gear may be connected to another end opposite to an end of the first shaft connected to the motor. The second gear may be engaged with the first gear. The second gear may be connected to an end (e.g., the end 320a of FIG. 4) of the second shaft. The third gear may be engaged with the first gear. The third gear may be connected to an end (e.g., the end 330a of FIG. 4) of the third shaft.

According to an example embodiment, the second gear may be disposed in a third direction (e.g., the third direction D3 of FIG. 6A) perpendicular to the first direction with respect to the first gear. The third gear may be disposed in a fourth direction (e.g., the fourth direction D4 of FIG. 6A) opposite to the third direction with respect to the first gear. According to an example embodiment of the present disclosure, the first gear, the second gear, and the third gear may be configured to transmit a driving force provided from the motor. When the first gear rotates by the rotation of the motor, the second gear and the third gear may rotate in the same direction. Since a rotational direction of the second gear (or the rotational direction of the second shaft) and a rotational direction of the third gear (or the rotational direction of the third shaft) are the same, the direction of the first screw thread and the direction of the second screw thread may be opposite to each other. Through the structure, the distance between the first lens and the second lens may increase or decrease.

According to an example embodiment, the second shaft may include a first screw thread formed on a surface of the second shaft. The third shaft may include a second screw thread formed on a surface of the third shaft. The second screw line may have the same direction as a direction of the first screw thread. The driving unit may include a first gear, a second gear, a third gear, and a fourth gear (e.g., the fourth gear 304 of FIG. 7A). The first gear may be connected to another end opposite to an end of the first shaft connected to the motor. The second gear may be connected to an end of the second shaft. The third gear may be engaged with the first gear. The third gear may be connected to an end of the third shaft. The fourth gear may be disposed between the first gear and the second gear to be engaged with the first gear and the second gear. According to an example embodiment of the present disclosure, a driving force may be transmitted through an auxiliary gear (e.g., the fourth gear) between the first gear and the second gear. In a case of the above-described structure, when the first gear is rotated by the rotation of the motor, the second gear and the third gear may be rotated in different directions. Since a rotational direction of the second gear (or the rotational direction of the second shaft) and a rotational direction of the third gear (or the rotational direction of the third shaft) are different from each other, the direction of the first screw thread and the direction of the second screw thread may be the same. Through the structure, the distance between the first lens and the second lens may increase or decrease.

The electronic device according to an example embodiment may further include a housing (e.g., the housing 210 of FIG. 3). The housing may at least partially surround the first lens, the second lens, and the driving unit. The housing may include a recessed portion (e.g., the recessed portion 217 of FIG. 3). The recessed portion may be formed between the first lens and the second lens. The recessed portion may be recessed from an edge of the housing extending in the first direction toward another edge opposite to the edge. According to an example embodiment of the present disclosure, as the size of the driving unit decreases, the housing may include the recessed portion. In order to form the recessed portion, a space that may be removed between the first lens and the second lens may be required. According to an example embodiment, as the size of the driving unit decreases, a space capable of forming the recessed portion may be easily secured. When the user wears the electronic device, as the recessed portion is supported by a nose, the electronic device may be stably worn by the user, and the user may easily wear the electronic device.

The electronic device according to an example embodiment may further include a controller (e.g., the controller 391a of FIG. 9A) connected to the first shaft. The controller may be configured to move the first barrel and the second barrel by rotating the first shaft when rotated by an external force. According to an example embodiment of the present disclosure, the electronic device may include the controller capable of manually adjusting the distance between the first lens and the second lens. For example, at least a portion of the controller may be exposed to the outside of the housing. The user may rotate the controller by applying the external force to a portion of the controller exposed to the outside of the housing. When the controller rotates, as a rotational force is transmitted to the first shaft, the motor may rotate. When the motor rotates, the distance between the first lens and the second lens may be adjusted.

An electronic device (e.g., the electronic device 101 of FIG. 3) according to an example embodiment may comprise a first lens (e.g., the first lens 233a of FIG. 3), a second lens (e.g., the second lens 233b of FIG. 3), a first barrel (e.g., the first barrel 231 of FIG. 6a), a second barrel (e.g., the second barrel 232 of FIG. 6a), and a driving unit (e.g., the driving unit 300 of FIG. 3). The second lens may be spaced apart from the first lens in a first direction (e.g., the first direction D1 of FIG. 3). The first barrel may at least partially surround the first lens. The second barrel may at least partially surround the second lens. The driving unit may be disposed between the first barrel and the second barrel. The driving unit may be configured to adjust a distance between the first lens and the second lens. The driving unit may include a motor (e.g., the motor M of FIG. 4), a first shaft (e.g., the first shaft 310 of FIG. 4), a second shaft (e.g., the second shaft 320 of FIG. 4), a third shaft (e.g., the third shaft 330 of FIG. 4), a first connecting structure (e.g., the first connecting structure 340 of FIG. 4), and a second connecting structure (e.g., the second connecting structure 350 of FIG. 4). The first shaft may be connected to the motor. The first shaft may be configured to rotate based on a rotation of the motor. The second shaft may include a first screw thread (e.g., the first screw thread 321 of FIG. 4). The second shaft may be configured to rotate based on the rotation of the first shaft. The third shaft may include a second screw thread (e.g., the second screw thread 312 of FIG. 4). A direction of the second screw thread may have a direction opposite to a direction of the first screw thread. The third shaft may be configured to rotate based on the rotation of the first shaft. The first connecting structure may be connected to each of the first barrel and the first screw thread of the second shaft. The first connecting structure may be configured to move the first barrel in the first direction or a second direction (e.g., the second direction D2 of FIG. 3), by moving in the first direction or the second direction opposite to the first direction along the second shaft, based on a rotation of the second shaft. The second connecting structure may be connected to each of the second barrel and the second screw thread of the third shaft. The second connecting structure may be configured to move the second barrel in the second direction or the first direction, by moving in the second direction or the first direction along the third shaft based on a rotation of the third shaft. The first shaft, the second shaft, and the third shaft may be arranged in a direction (e.g., the third direction D3 or the fourth direction D4 of FIG. 6A) perpendicular to the first direction.

According to an example embodiment, the driving unit may include a first gear (e.g., the first gear 301 of FIG. 4), a second gear (e.g., the second gear 302 of FIG. 4), and a third gear (e.g., the third gear 303 of FIG. 4). The first gear may be connected to another end opposite to an end of the first shaft connected to the motor. The second gear may be engaged with the first gear. The second gear may be connected to an end of the second shaft. The third gear may be engaged with the first gear. The third gear may be connected to an end of the third shaft.

According to an example embodiment, when the motor rotates in a rotational direction, the first connecting structure may move the first lens in the first direction along the second shaft, and the second connecting structure may move in the second direction along the third shaft. The distance may decrease by the movement. When the motor rotates in another rotational direction, the first connecting structure may move the first lens in the second direction along the second shaft, and the second connecting structure may move the second lens in the first direction along the third shaft. The distance may increase by the movement.

According to an example embodiment, the driving unit may include a case (e.g., the case 360 of FIG. 4). The case may be disposed between the first lens and the second lens. The motor, the first shaft, and the second shaft may be disposed in the case. The case may include a first recess (e.g., the first recess 361 of 6A) and a second recess (e.g., the second recess 362 of FIG. 6A). The second shaft and the first connecting structure may be at least partially positioned in the first recess. The third shaft and the second connecting structure may be at least partially disposed in the second recess.

According to an example embodiment, the driving unit may include a first guide (e.g., the first guide 370 of FIG. 4) and a second guide (e.g., the second guide 380 of FIG. 4). The first guide may penetrate the first connecting structure. The first guide may extend parallel to the second shaft. The first guide may guide the movement of the first connecting structure. The second guide may penetrate the second connecting structure. The second guide may extend parallel to the third shaft. The second guide may guide the movement of the second connection structure.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first barrel including a first lens;
a second barrel including a second lens spaced apart from the first lens in a first direction; and
a driving unit, disposed between the first lens and the second lens, configured to adjust a distance between the first lens and the second lens,
wherein the driving unit includes:
a motor,
a first shaft, connected to the motor, configured to rotate based on a rotation of the motor,
a second shaft, operatively connected to the first barrel, configured to move the first barrel including the first lens in the first direction or a second direction opposite to the first direction, by rotating based on the rotation of the first shaft, and
a third shaft, operatively connected to the second barrel, configured to move the second barrel including the second lens in the second direction or the first direction, by rotating based on the rotation of the first shaft, and
wherein the first shaft, the second shaft, and the third shaft are arranged in a direction perpendicular to the first direction.

2. The electronic device of claim 1,
wherein the first shaft is disposed between the second shaft and the third shaft.

3. The electronic device of claim 1 or 2,
wherein the driving unit includes:
a first connecting structure, connected to the first barrel and the second shaft, respectively, configured to move the first barrel including the first lens in the first direction or the second direction opposite to the first direction, based on a rotation of the second shaft, and
a second connecting structure, connected to the second barrel and the third shaft, respectively, configured to move the second barrel including the second lens in the second direction or the first direction, based on a rotation of the third shaft.

4. The electronic device of claim 3,
wherein a rotation of the motor in a rotational direction is configured to reduce the distance, by causing movement of the first barrel in the first direction along the second shaft via the first connecting structure and movement of the second barrel in the second direction along the third shaft via the second connecting structure, and
wherein a rotation of the motor in another rotational direction is configured to increase the distance, by causing movement of the first barrel in the second direction along the second shaft via the first connecting structure and movement of the second barrel in the first direction along the third shaft via the second connecting structure.

5. The electronic device of claim 3 or 4,
wherein the driving unit includes a case in which the motor, the first shaft, and the second shaft are disposed, and
wherein the case includes:
a first recess in which the second shaft and the first connecting structure are at least partially disposed, and
a second recess in which the third shaft and the second connecting structure are at least partially disposed.

6. The electronic device of claim 5,
wherein the first connecting structure is movable from an end of the first recess to another end of the first recess, and
wherein the second connecting structure is movable from an end of the second recess to another end of the second recess.

7. The electronic device of any one of claims 3 to 6,
wherein the driving unit includes:
a first guide, configured to guide the movement of the first connecting structure, by passing through the first connecting structure and extending in parallel with the second shaft, and
a second guide, configured to guide the movement of the second connecting structure, by passing through the second connecting structure and extending in parallel with the third shaft.

8. The electronic device of any one of claims 3 to 7,
wherein the first connecting structure includes:
a first body, extending from the first barrel in the first direction, spaced apart from the second shaft, and
a second body, extending from the first body, connected to the second shaft, and
wherein the second connecting structure includes:
a third body, extending from the second barrel in the second direction, spaced apart from the third shaft, and
a fourth body, extending from the third body, connected to the third shaft.

9. The electronic device of claim 8,
wherein a direction in which the second body extends from the first body is opposite to a direction in which the fourth body extends from the third body.

10. The electronic device of any one of claims 1 to 9,
wherein the second shaft includes a first screw thread formed on a surface of the second shaft, and
wherein the third shaft includes a second screw thread formed on a surface of the third shaft, the second screw thread having a direction opposite to a direction of the first screw thread.

11. The electronic device of claim 10,
wherein the driving unit includes:
a first gear, wherein an end of the first shaft is connected to the motor and another end of the first shaft opposite to the end is connected to the first gear,
a second gear, engaged with the first gear, connected to an end of the second shaft, and
a third gear, engaged with the first gear, connected to an end of the third shaft.

12. The electronic device of claim 11,
wherein the second gear is disposed in a third direction perpendicular to the first direction with respect to the first gear, and
wherein the third gear is disposed in a fourth direction opposite to the third direction with respect to the first gear.

13. The electronic device of any one of claims 1 to 12,
wherein the second shaft includes a first screw thread formed on a surface of the second shaft,
wherein the third shaft includes a second screw thread formed on a surface of the third shaft, the second screw thread having the same direction as a direction of the first screw thread,
wherein the driving unit includes:
a first gear, wherein an end of the first shaft is connected to the motor and another end of the first shaft opposite to the end is connected to the first gear,
a second gear connected to an end of the second shaft,
a third gear, engaged with the first gear, connected to an end of the third shaft, and
a fourth gear, disposed between the first gear and the second gear, engaged with the first gear and the second gear.

14. The electronic device of any one of claims 1 to 13, further comprising a housing at least partially enclosing the first lens, the second lens, and the driving unit, and
wherein the housing includes a recessed portion, formed between the first lens and the second lens, recessed from an edge of the housing extending in the first direction toward another edge of the housing opposite to the edge.

15. The electronic device of any one of claims 1 to 14, further comprising a controller connected to the first shaft, and
wherein the controller is configured to move the first barrel and the second barrel by rotating the first shaft when the controller is rotated by external force.
